# EUROPEAN PATENT APPLICATION

(11) **EP 3 495 108 A1**
(43) Date of publication of application: **12.06.2019**
(21) Application number: 17836809.8
(22) Date of filing: 25.07.2017
(51) Int. Cl.: B29B 7/48, B29C 64/118, B29C 64/40, B33Y 10/00, B33Y 40/00, B33Y 70/00, C08J 3/20, C08L 33/06, C08L 67/00, C08L 77/00, C08L 101/06

(54) **METHOD FOR PRODUCING FUSIBLE MATERIAL FOR THREE-DIMENSIONAL MOLDING**

(30) Priority: 05.08.2016 JP 2016154649; 20.07.2017 JP 2017141058
(71) Applicant: Kao Corporation, Chuo-Ku Tokyo 103-8210 (JP)
(72) Inventor: TSUBOI, Tomoya, Wakayama-shi Wakayama 640-8580 (JP); HIRAI, Jouji, Wakayama-shi Wakayama 640-8580 (JP); KIMURA, Takuma, Wakayama-shi Wakayama 640-8580 (JP); YOSHIMURA, Tadanori, Wakayama-shi Wakayama 640-8580 (JP); ONOUE, Akihiro, Wakayama-shi Wakayama 640-8580 (JP)
(74) Representative: Hoffmann Eitle
(86) International application number: PCT/JP2017/026820
(87) International publication number: WO 2018/025703

(57) **Abstract**

The method for manufacturing a soluble material for three-dimensional modeling that is used as a material of a support material that supports a three-dimensional object when manufacturing the three-dimensional object with a 3D printer of a fused deposition modeling system, comprising a kneading step of kneading raw materials of the soluble material for three-dimensional modeling by a twin screw extruder having a screw configuration in which a ratio of a total length K of kneading discs to a total length L of an effective screw is 0.20 < K/L < 0.70 and in which a temperature Tₘᵢₓ of the raw materials of the soluble material for three-dimensional modeling in the kneading step and a glass transition temperature T_{g} of a base polymer contained in the raw materials of the soluble material for three-dimensional modeling satisfy a formula T_{g} + 80 (°C) < Tₘᵢₓ < T_{g} + 200 (°C). According to the present invention, a method for manufacturing a soluble material for three-dimensional modeling can be provided having excellent mechanical characteristics and that does not break easily even if the material is provided as a filament.

## Description

### TECHNICAL FIELD

The present invention relates to a method for manufacturing a soluble material for three-dimensional modeling that is used as a material of a support material that supports a three-dimensional object when manufacturing the three-dimensional object with a 3D printer, particularly a 3D printer of a fused deposition modeling system.

### BACKGROUND ART

The 3D printer is one type of rapid prototyping, and it is a three-dimensional printer for modeling a three-dimensional object based on 3D data such as 3D CAD and 3D CG. Systems of 3D printing have been known, such as a fused deposition modeling system (hereinafter referred to as an FDM system), an inkjet ultraviolet curing system, a stereolithography system, and a selective laser sintering system. Among these systems, the FDM system is a modeling system of heat-melting, extruding, and laminating polymer filaments to obtain a three-dimensional object, and the FDM system does not use a reaction of the material unlike other systems. Accordingly, a 3D printer of an FDM system is small and inexpensive, and has become popular in recent years as an apparatus with less post-processing. In order to model a three-dimensional object having a more complex shape in a FDM system, a modeling material constituting the three-dimensional object and a support material for supporting a three-dimensional structure of the modeling material are laminated to obtain a precursor of the three-dimensional object, and then the support material is removed from the precursor of the three-dimensional object to obtain the target three-dimensional object (for example, JP-T-2008-507619).

### SUMMARY OF THE INVENTION

The method for manufacturing a soluble material for three-dimensional modeling of the present invention is a method for manufacturing a soluble material for three-dimensional modeling that is used as a material of a support material that supports a three-dimensional object when manufacturing the three-dimensional object with a 3D printer of a fused deposition modeling system, including a kneading step of kneading raw materials of the soluble material for three-dimensional modeling by a twin screw extruder having a screw configuration in which a ratio of a length K of kneading discs to a total length L of an effective screw is 0.20 < K/L < 0.70 and in which a temperature Tₘᵢₓ of the raw materials of the soluble material for three-dimensional modeling in the kneading step and a glass transition temperature T_{g} of a base polymer contained in the raw materials of the soluble material for three-dimensional modeling satisfy a formula T_{g} + 80 (°C) < Tₘᵢₓ < T_{g} + 200 (°C) .

### DETAILED DESCRIPTION OF THE INVENTION

The soluble material for three-dimensional modeling that is used as a material of a support material that supports a three-dimensional object is provided as a filament wound around a feeding reel and supplied to a 3D printer of a fused deposition modeling system from the feeding reel. However, the problem is that the filament of the soluble material for three-dimensional modeling easily breaks when the filament is wound around the feeding reel or when the filament is fed to the 3D printer.

The present invention provides a method for manufacturing a soluble material for three-dimensional modeling having excellent mechanical characteristics and that does not break even if the material is provided as a filament.

The method for manufacturing a soluble material for three-dimensional modeling of the present invention is a method for manufacturing a soluble material for three-dimensional modeling that is used as a material of a support material that supports a three-dimensional object when manufacturing the three-dimensional object with a 3D printer of a fused deposition modeling system, including a kneading step of kneading raw materials of the soluble material for three-dimensional modeling by a twin screw extruder having a screw configuration in which a ratio of a length K of kneading discs to a total length L of an effective screw is 0.20 < K/L < 0.70 and in which a temperature Tₘᵢₓ of the raw materials of the soluble material for three-dimensional modeling in the kneading step and a glass transition temperature T_{g} of a base polymer contained in the raw materials of the soluble material for three-dimensional modeling satisfy a formula T_{g} + 80 (°C) < Tₘᵢₓ < T_{g} + 200 (°C) .

According to the present invention, a method for manufacturing a soluble material for three-dimensional modeling can be provided having excellent mechanical characteristics and that does not break easily even if the material is provided as a filament.

Hereinafter, the embodiment of the present invention will be described.

### <Method for Manufacturing Soluble Material for Three-Dimensional Modeling>

The method for manufacturing a soluble material for three-dimensional modeling of the present embodiment is a method for manufacturing a soluble material for three-dimensional modeling that is used as a material of a support material that supports a three-dimensional object when manufacturing the three-dimensional object with a 3D printer of a fused deposition modeling system, including a kneading step of kneading raw materials of the soluble material for three-dimensional modeling by a twin screw extruder having a screw configuration in which a ratio of a length K of kneading discs to a total length L of an effective screw is 0.20 < K/L < 0.70 and in which a temperature Tₘᵢₓ of the raw materials of the soluble material for three-dimensional modeling in the kneading step and a glass transition temperature T_{g} of a base polymer contained in the raw materials of the soluble material for three-dimensional modeling satisfy a formula T_{g} + 80 (°C) < Tₘᵢₓ < T_{g} + 200 (°C).

According to the method for manufacturing a soluble material for three-dimensional modeling of the present embodiment, a soluble material for three-dimensional modeling can be provided having excellent mechanical characteristics and that does not break easily even if the material is provided as a filament. The reason why the composition of the treating agent has such advantageous effects is unclear. However, the reason would be as follows:

In order to make the filament not to break easily by adding toughness, an elastomer may be used as a raw material of the soluble material for three-dimensional modeling. However, an effect of designing the material by using the elastomer cannot be easily obtained even if the elastomer is contained in the soluble material for three-dimensional modeling. This may be because the elastomer is not dispersed sufficiently in the soluble material for three-dimensional modeling even when a compatibilizer is used due to poor compatibility of the elastomer with a base polymer that is a base of the soluble material for three-dimensional modeling. According to the method for manufacturing a soluble material for three-dimensional modeling of the present embodiment, the elastomer is dispersed sufficiently in the soluble material for three-dimensional modeling to obtain the effect of designing the material by using the elastomer and to improve the toughness. Therefore, a soluble material for three-dimensional modeling can be provided having excellent mechanical characteristics and that does not break easily even if the material is provided as a filament.

### [Raw Materials of Soluble Material for Three-Dimensional Modeling]

The raw material of the soluble material for three-dimensional modeling contains a base polymer of the soluble material for three-dimensional modeling, a compatibilizer, and an elastomer.

### [Base Polymer of Soluble Material for Three-Dimensional Modeling]

The base polymer of the soluble material for three-dimensional modeling is not particularly limited as long as it is used as a base polymer of the soluble material for three-dimensional modeling in the method for manufacturing a three-dimensional object of a conventional FDM system. Examples of the base polymer include polyvinyl alcohol, polyoxazoline, polyacrylamide, an acrylate (co)polymer, a methacrylate (co)polymer, a polyester resin, a polyamide resin, and a methacrylic resin.

If a resin having low solubility to neutral water such as a methacrylic resin is used as the base polymer of the soluble material for three-dimensional modeling, it is necessary to use a strong alkaline aqueous solution to remove the support material from the precursor of a three-dimensional object. However, the strong alkaline aqueous solution is dangerous to human bodies and imposes a lot of load on the environment. In addition, the three-dimensional object in the precursor of a three-dimensional object tends to be eroded by alkali if the precursor of a three-dimensional object is soaked in the strong alkaline aqueous solution for a long period of time, and an application of a polyester resin such as polylactic acid (PLA) having low resistance to alkali is limited to be used as a material of a three-dimensional object. Therefore, a resin having a hydrophilic group that can be removed by neutral water with pH of 6 to 8 that is not a strong alkaline aqueous solution is preferably used as the base polymer of the soluble material for three-dimensional modeling.

A modeling material with high heat resistance generally has a high melting point. However, if the temperature when heat-melting, extruding, and laminating the modeling material by a 3D printer is remarkably different from the temperature of the support material contacting the modeling material, the modeling accuracy of a three-dimensional object may be deteriorated. Therefore, the soluble material for three-dimensional modeling that is a material of the support material is heat-melted, extruded, and laminated at a temperature that is close to the temperature of the modeling material when the modeling material with a high melting point is heat-melted, extruded, and laminated by a 3D printer. In this case, the soluble material for three-dimensional modeling, that is a material of the support material that can be removed by neutral water with pH of 6 to 8 that is not a strong alkaline aqueous solution, also preferably has a high melting point.

Examples of the resin that can be removed by neutral water with pH of 6 to 8 that is not a strong alkaline aqueous solution and has a high melting point are a polyester resin having a hydrophilic group and a polyamide resin having a hydrophilic group.

### (Polyester resin having Hydrophilic Group)

An example of the polyester resin is a polyester resin having a hydrophilic monomer unit A₁ having a hydrophilic group, a hydrophobic dicarboxylic acid monomer unit B₁, and a diol monomer unit; in which a ratio of the hydrophilic monomer unit A₁ to a total amount of the hydrophilic monomer unit A₁ and the hydrophobic dicarboxylic acid monomer unit B₁ in the polyester resin is 10 mol% to 70 mol%.

### <Hydrophilic Monomer Unit A₁>

The polyester resin has a hydrophilic monomer unit A₁ having a hydrophilic group. The hydrophilic monomer unit A₁ is not particularly limited as long as it is a monomer unit having a hydrophilic group. A monomer for deriving the hydrophilic monomer unit A₁ is also referred to as a monomer A₁.

From a viewpoint of the solubility into neutral water and a viewpoint of the easiness of the polymerization when producing the polyester resin, examples of the hydrophilic group are at least one type selected from the group consisting of a primary amino group, a secondary amino group, a tertiary amino group, a quaternary ammonium salt group, an oxyethylene group, a hydroxyl group, a carboxyl group, a carboxyl salt group, a phosphoric acid group, a phosphate group, a sulfonic acid group, and a sulfonate group.

From a viewpoint of the solubility into neutral water and a viewpoint of the easiness of the polymerization when producing the polyester resin, the secondary amino group is preferably at least one type selected from the group consisting of a secondary amino group represented by -NHR¹ (R¹ represents a straight chain or branched alkyl group having 1 to 14 carbon atoms) and a secondary amino group represented by -NH-.

From a viewpoint of the solubility into neutral water and a viewpoint of the easiness of the polymerization when producing the polyester resin, the tertiary amino group is preferably at least one type selected from the group consisting of a tertiary amino group represented by -NR²R³ (R² represents a straight chain or branched alkyl group having 1 to 14 carbon atoms and R³ represents a straight chain or branched alkyl group having 1 to 14 carbon atoms) and a tertiary amino group represented by -NR⁴- (R⁴ represents a straight chain or branched alkyl group having 1 to 14 carbon atoms).

From a viewpoint of the solubility into neutral water and a viewpoint of the easiness of the polymerization when producing the polyester resin, the quaternary ammonium salt group is preferably at least one type selected from the group consisting of a quaternary ammonium salt group represented by -N⁺{R⁵R⁶R⁷} · X⁻ (Each of R⁵, R⁶, and R⁷ represents a hydrogen atom or an alkyl group having 1 to 14 carbon atoms and X⁻ represents a hydroxy ion, a halogen ion, CH₃SO₄⁻, or CH₃CH₂SO₄⁻).

From a viewpoint of the solubility into neutral water and a viewpoint of the easiness of the polymerization when producing the polyester resin, the oxyethylene group is preferably at least one type selected from the group consisting of an oxyethylene group represented by -{CH₂CH₂O}ₙ₁- (n1 represents an average number and it is an integer of 1 to 2,500, preferably 2 to 1,000, more preferably 3 to 100, and further preferably 4 to 50) and an oxyethylene group represented by -{CH₂CH₂O}ₘ₁-R⁸ (m1 represents an average number and it is an integer of 1 to 2,500, preferably 2 to 1,000, more preferably 3 to 100, and further preferably 4 to 50. R⁸ represents a hydrogen atom or a straight chain or branched alkyl group having 1 to 10 carbon atoms and it is more preferably 2 to 6 and further preferably 3 to 5) .

From a viewpoint of the solubility into neutral water and a viewpoint of the easiness of the polymerization when producing the polyester resin, the carboxyl salt group is preferably a carboxyl salt group represented by -COOM¹ (M¹ represents a counterion of a carboxyl group constituting the carboxyl salt group; and from a viewpoint of the solubility into neutral water, it is preferably at least one type selected from the group consisting of a sodium ion, a potassium ion, a lithium ion, calcium ion, a magnesium ion, an ammonium ion, a barium ion, and a zinc ion; more preferably at least one type selected from the group consisting of a sodium ion, a potassium ion, a lithium ion, a magnesium ion, and an ammonium ion; further preferably at least one type selected from the group consisting of a sodium ion and a potassium ion; and further more preferably a sodium ion).

From a viewpoint of the solubility into neutral water and a viewpoint of the easiness of the polymerization when producing the polyester resin, the phosphate group is preferably at least one type selected from the group consisting of a phosphate group represented by -PO₄M²₂, -PO₄HM², and -PO₄M² (M² represents a counterion of a phosphoric acid group constituting the phosphate group; and from a viewpoint of the solubility into neutral water, it is preferably at least one type selected from the group consisting of a sodium ion, a potassium ion, a lithium ion, calcium ion, a magnesium ion, an ammonium ion, a barium ion, and a zinc ion; more preferably at least one type selected from the group consisting of a sodium ion, a potassium ion, a lithium ion, a magnesium ion, and an ammonium ion; further preferably at least one type selected from the group consisting of a sodium ion and a potassium ion; and further more preferably a sodium ion).

From a viewpoint of the solubility into neutral water and a viewpoint of the easiness of the polymerization when producing the polyester resin, the sulfonate group is preferably a sulfonate group represented by -SO₃M³ (M³ represents a counterion of a sulfonic acid group constituting the sulfonate group; and from a viewpoint of the solubility into neutral water, it is preferably at least one type selected from the group consisting of a sodium ion, a potassium ion, a lithium ion, calcium ion, a magnesium ion, an ammonium ion, a barium ion, and a zinc ion; more preferably at least one type selected from the group consisting of a sodium ion, a potassium ion, a lithium ion, a magnesium ion, and an ammonium ion; further preferably at least one type selected from the group consisting of a sodium ion and a potassium ion; and further more preferably a sodium ion).

From a viewpoint of the solubility into neutral water, a viewpoint of moisture absorption resistance, a viewpoint of heat resistance required for modeling by a 3D printer, and a viewpoint of the easiness of the polymerization when producing the polyester resin, the monomer A₁ is preferably at least one type selected from the group consisting of carboxylic acid, amine, and amino acid, and more preferably carboxylic acid. Among the type of carboxylic acid, from the same viewpoints, aromatic carboxylic acid is preferable; and at least one type selected from the group consisting of hydroxy group-containing aromatic dicarboxylic acid, primary amino group-containing aromatic dicarboxylic acid, sulfonic acid group-containing aromatic dicarboxylic acid, and sulfonate group-containing aromatic dicarboxylic acid are more preferable. Among those, from the same viewpoints, at least one type selected from the group consisting of 5-hydroxyisophthalic acid, 1,3,5-benzene tricarboxylic acid, 5-aminoisophthalic acid, 5-sulfoisophthalic acid, 2-sulfoterephthalic acid, and 4-sulfo-2,6-naphthalene dicarboxylic acid are preferable; at least one type selected from the group consisting of 5-sulfoisophthalic acid and 2-sulfoterephthalic acid are more preferable; and 5-sulfoisophthalic acid is further preferable.

From a viewpoint of the solubility into neutral water, the content of the hydrophilic group in the polyester resin is preferably 0.5 mmol/g or more, more preferably 0.6 mmol/g or more, and further preferably 0.7 mmol/g or more; and from a viewpoint of moisture absorption resistance, it is preferably 3.0 mmol/g or less, more preferably 2.0 mmol/g or less, and further preferably 1.5 mmol/g or less. From the viewpoint of the solubility into neutral water and the viewpoint of moisture absorption resistance, the content of the hydrophilic group in the polyester resin is preferably 0.5 mmol/g to 3.0 mmol/g, more preferably 0.6 mmol/g to 2.0 mmol/g, and further preferably 0.7 mmol/g to 1.5 mmol/g.

From a viewpoint of the solubility into neutral water, the ratio of the amount of the hydrophilic monomer unit A₁ to the total amount of monomer units in the polyester resin is 5 mol% or more, preferably 7 mol% or more, more preferably 10 mol% or more, and further preferably 12 mol% or more; and from a viewpoint of moisture absorption resistance, it is 35 mol% or less, preferably 33 mol% or less, more preferably 32 mol% or less, and further preferably 30 mol% or less. From the viewpoint of the solubility into neutral water, the ratio of the amount of the hydrophilic monomer unit A₁ to the total amount of monomer units in the polyester resin is preferably 5 mol% to 35 mol%, more preferably 7 mol% to 33 mol%, further preferably 10 mol% to 32 mol%, and further more preferably 12 mol% to 30 mol%. From the viewpoint of the solubility into neutral water and from the viewpoint of moisture absorption resistance, the ratio of the amount of the hydrophilic monomer unit A₁ to the total amount of monomer units in the polyester resin is preferably 8 mol% to 13 mol%.

### <Hydrophobic Dicarboxylic Acid Monomer Unit B₁ >

The polyester resin has a hydrophobic dicarboxylic acid monomer unit B₁. The dicarboxylic acid monomer unit B₁ does not have a hydrophilic group. In the present specification, dicarboxylic acid for deriving the hydrophobic dicarboxylic acid monomer unit B₁ is also referred to as dicarboxylic acid B₁.

The dicarboxylic acid B₁ is not particularly limited as long as it is dicarboxylic acid. However, from a viewpoint of the solubility into neutral water, a viewpoint of moisture absorption resistance, a viewpoint of heat resistance required for modeling by a 3D printer, and a viewpoint of the easiness of the polymerization when producing the polyester resin, the dicarboxylic acid B₁ is preferably at least one type selected from the group consisting of aromatic dicarboxylic acid, aliphatic dicarboxylic acid, and alicyclic dicarboxylic acid. Among these, from the same viewpoints, at least one type selected from the group consisting of terephthalic acid, isophthalic acid, 2,5-furan dicarboxylic acid, 2,6-naphthalene dicarboxylic acid, 1,4-cyclohexane dicarboxylic acid, and 1,3-adamantane dicarboxylic acid are more preferable; and at least one type selected from the group consisting of terephthalic acid, 2,5-furan dicarboxylic acid, and 2,6-naphthalene dicarboxylic acid are further preferable.

From a viewpoint of moisture absorption resistance, the ratio of the amount of the hydrophobic dicarboxylic acid monomer unit B₁ in the polyester resin to the total amount of monomer units in the polyester resin is preferably 15 mol% or more, more preferably 18 mol% or more, and further preferably 20 mol% or more; and from a viewpoint of the solubility into neutral water, it is preferably 45 mol% or less, more preferably 42 mol% or less, and further preferably 40 mol% or less. From the viewpoint of moisture absorption resistance and the viewpoint of the solubility into neutral water, the ratio of the amount of the hydrophobic dicarboxylic acid monomer unit B₁ in the polyester resin to the total amount of monomer units in the polyester resin is preferably 15 mol% to 45 mol%, more preferably 20 mol% to 42 mol%, and further preferably 30 mol% to 40 mol%.

From the viewpoints of the solubility into neutral water, moisture absorption resistance, and heat resistance required for modeling by a 3D printer, the mole ratio of the hydrophilic monomer unit A₁ to the hydrophobic dicarboxylic acid monomer unit B₁ (hydrophilic monomer unit A₁ / hydrophobic dicarboxylic acid monomer unit B₁) is preferably 10/90 or more, more preferably 15/85 or more, further preferably 18/82 or more, and further more preferably 20/80 or more; and from the same viewpoints, it is preferably 70/30 or less, more preferably 65/35 or less, further preferably 60/40 or less, further more preferably 40/60 or less, and further more preferably 26/74 or less.

### <Diol Monomer Unit>

The polyester resin has a diol monomer unit. The diol for deriving the diol monomer unit is also referred to as diol C.

The diol C is not particularly limited, and aliphatic diol, aromatic diol, etc. can be used. However, from a viewpoint of the production cost of the polyester resin, the diol C is preferably aliphatic diol.

From the viewpoints of the solubility into neutral water, moisture absorption resistance, and heat resistance required for modeling by a 3D printer, the number of carbon atoms in the diol C is preferably 2 or more; and from the same viewpoints, it is preferably 31 or less, more preferably 25 or less, further preferably 20 or less, and further more preferably 15 or less.

An example of the aliphatic diol is at least one type selected from the group consisting of chain diol and cyclic diol. From the viewpoints of the solubility into neutral water, moisture absorption resistance, and toughness (strength) required for modeling by a 3D printer, chain diol is preferable.

From the viewpoints of the solubility into neutral water, moisture absorption resistance, and heat resistance required for modeling by a 3D printer, the number of carbon atoms in the chain diol is preferably 2 or more; and from the same viewpoints, it is preferably 6 or less, more preferably 4 or less, and further preferably 3 or less.

From the viewpoints of the solubility into neutral water, moisture absorption resistance, and heat resistance required for modeling by a 3D printer, the number of carbon atoms in the cyclic diol is preferably 6 or more; and from the same viewpoints, it is preferably 31 or less, more preferably 30 or less, and further preferably 27 or less.

The diol C may have ether enzyme. However, if the diol C is a chain aliphatic diol, from the viewpoints of the solubility into neutral water, moisture absorption resistance, and heat resistance required for modeling by a 3D printer, the number of the ether enzyme is preferably 1 or less; and if the diol C is a cyclic aliphatic diol, from the same viewpoints, the number of the ether enzyme is preferably 2 or less.

From the viewpoints of the solubility into neutral water, moisture absorption resistance, and heat resistance required for modeling by a 3D printer, the chain diol is preferably at least one type selected from the group consisting of ethylene glycol, 1,2-propanediol, 1,3-propanediol, diethylene glycol, and dipropylene glycol; and more preferably at least one type selected from the group consisting of ethylene glycol, 1,2-propaneediol, and 1,3-propanediol. Among these, diethylene glycol and dipropylene glycol may be prepared as a raw material for polymerization or may be generated during the polymerization.

If the diol C contains diethylene glycol, from the viewpoints of the solubility into neutral water, moisture absorption resistance, and heat resistance required for modeling by a 3D printer, the ratio of diethylene glycol to the total amount of all diol monomer units in the polyester resin is preferably 5 mol% or more, more preferably 10 mol% or more, further preferably 15 mol% or more, further more preferably 20 mol% or more, especially preferably 25 mol% or more, more especially preferably 30 mol% or more; and preferably 60 mol% or less, more preferably 55 mol% or less, further preferably 50 mol% or less, and further preferably 45 mol% or less.

From the viewpoints of the solubility into neutral water, moisture absorption resistance, and heat resistance required for modeling by a 3D printer, the cyclic diol is preferably at least one type selected from the group consisting of 1,4-cyclohexane dimethanol, hydrogenated bisphenol A, isosorbide, bisphenoxyethanolfluorene, bisphenolfluorene, biscresoxyethanolfluorene, and biscresolfluorene.

If the diol C is at least one type selected from the group consisting of ethylene glycol, 1,2-propanediol, 1,3-propanediol, diethylene glycol, dipropylene glycol, 1,4-cyclohexane dimethanol, hydrogenated bisphenol A, isosorbide, bisphenoxyethanolfluorene, bisphenolfluorene, biscresoxyethanolfluorenem and biscresolfluorene; from the viewpoints of the solubility into neutral water, moisture absorption resistance, and heat resistance required for modeling by a 3D printer; the ratio of the total amount of ethylene glycol, 1,2-propanediol, 1,3-propanediol, diethylene glycol, dipropylene glycol, 1,4-cyclohexane dimethanol, hydrogenated bisphenol A, isosorbide, bisphenoxyethanolfluorene, bisphenolfluorene, biscresoxyethanolfluorene and biscresolfluorene to the total amount of all diol monomer units in the polyester resin is preferably 80 mol% or more, more preferably 90 mol% or more, further preferably 95 mol% or more, further more preferably 98 mol% or more, especially preferably substantially 100 mol%, and more especially preferably 100 mol%.

The polyester resin is preferably the following resin from the viewpoints of the solubility into neutral water, moisture absorption resistance, and heat resistance required for modeling by a 3D printer: a polyester resin α in which the ratio of the hydrophilic monomer unit A₁ in the total of all dicarboxylic acid monomer units, which include the hydrophilic monomer unit A₁, is 10 mol% to 70 mol%; the ratio of the dicarboxylic acid monomer units B₁ in the same total is 30 mol% to 90 mol%; and the dicarboxylic acid B₁ for obtaining the dicarboxylic acid monomer units B₁ is 2,6-naphthalene dicarboxylic acid.

### <Polyester Resin α>

From the viewpoints of the solubility into neutral water, moisture absorption resistance, and heat resistance required for modeling by a 3D printer; the ratio of the hydrophilic monomer unit A₁ to the total amount of all dicarboxylic acid monomer units including the hydrophilic monomer unit A₁ in the polyester resin α is preferably 10 mol% or more and more preferably 20 mol% or more; and from the same viewpoints, it is preferably 70 mol% or less, more preferably 65 mol% or less, further preferably 60 mol% or less, further more preferably 40 mol% or less, and further more preferably 27 mol% or less.

From the viewpoints of the solubility into neutral water, moisture absorption resistance, and heat resistance required for modeling by a 3D printer; the ratio of the dicarboxylic acid monomer unit B₁ to the total amount of all dicarboxylic acid monomer units including the hydrophilic monomer unit A₁ in the polyester resin α is preferably 30 mol% or more, more preferably 35 mol% or more, further preferably 40 mol% or more, further more preferably 65 mol% or more, and further more preferably 73 mol% or more; and from the same viewpoints, it is preferably 90 mol% or less and more preferably 80 mol% or less.

From the viewpoints of the solubility into neutral water, moisture absorption resistance, and heat resistance required for modeling by a 3D printer; the monomer A₁ in the polyester resin α is at least one type selected from the group consisting of 5-sulfoisophthalic acid and 2-sulfoisophthalic acid and more preferably 5-sulfoisophthalic acid.

From the viewpoints of the solubility into neutral water, moisture absorption resistance, and heat resistance required for modeling by a 3D printer, the diol C in the polyester resin α is preferably at least one type selected from the group consisting of ethylene glycol, 1,2-propanediol, 1,3-propanediol, diethylene glycol, dipropylene glycol, 1,4-cyclohexane dimethanol, hydrogenated bisphenol A, isosorbide, bisphenoxyethanolfluorene, bisphenolfluorene, biscresoxyethanolfluorene, and biscresolfluorene; and more preferably at least one type selected from the group consisting of ethylene glycol, diethylene glycol, 1,4-cyclohexane dimethanol, hydrogenated bisphenol A, isosorbide, and bisphenoxyethanolfluorene.

Examples of the polyester resin α can be shown by the following formulas (1) and (2). 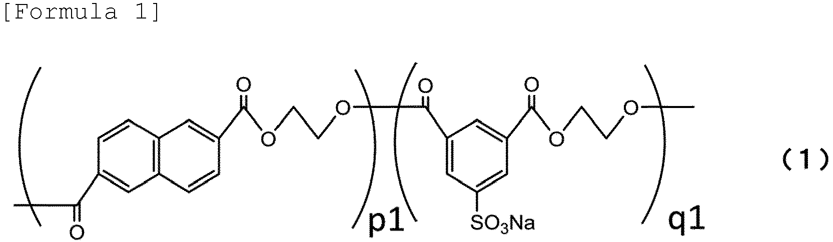 (In the formula (1), p1 represents the number-average degree of polymerization of ethylene 2,6-naphthalene dicarboxylate, and q1 represents the number-average degree of polymerization of ethylene 5-sulfoisophthalate. However, ethylene 2,6-naphthalene dicarboxylate and ethylene 5-sulfoisophthalate are a block copolymer and/or a random copolymer; and from a viewpoint of the solubility into neutral water, they preferably are a random copolymer.)

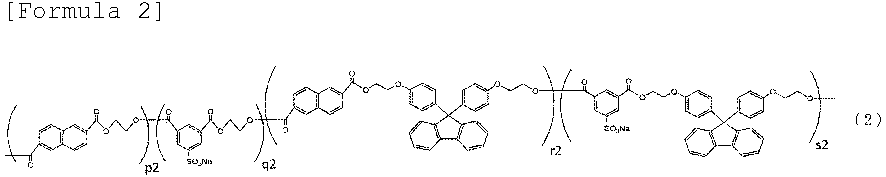

(In the formula (2), p2 represents the number-average degree of polymerization of ethylene 2,6-naphthalene dicarboxylate, q2 represents the number-average degree of polymerization of ethylene 5-sulfoisophthalate, r2 represents the number-average degree of polymerization of a condensate of bisphenoxyethanolfluorene and 2,6-naphthalene dicarboxylate, and s2 represents the number-average degree of polymerization of a condensate of bisphenoxyethanolfluorene and 5-sulfoisophthalate. However, ethylene 2,6-naphthalene dicarboxylate, ethylene 5-sulfoisophthalate, a condensate of bisphenoxyethanolfluorene and 2,6-naphthalene dicarboxylate, and a condensate of bisphenoxyethanolfluorene and 5-sulfoisophthalate are polymerized to form a block copolymer and/or a random copolymer; and from a viewpoint of the solubility into neutral water, they are polymerized to form a random copolymer.)

The polyester resin may have monomer unit other than the hydrophilic monomer unit A₁, the dicarboxylic acid monomer unit B₁, and diol monomer unit as long as the effect of the present embodiment is not impaired.

The method for manufacturing the polyester resin is not particularly limited and a conventionally known method for manufacturing a polyester resin can be applied.

### (Polyamide Resin having Hydrophilic Group)

An example of the polyamide resin is a polyamide resin having a hydrophilic monomer unit A₂ having a hydrophilic group, a hydrophobic dicarboxylic acid monomer unit B₂, and a hydrophobic diamine monomer unit, in which the ratio of the hydrophilic monomer unit A₂ to the total amount of all monomer units in the polyamide resin is 2.5 mol% to 40 mol%.

### (Hydrophilic Monomer Unit A₂)

The polyamide resin has a hydrophilic monomer unit A₂ having a hydrophilic group. The hydrophilic monomer unit A₂ is not particularly limited as long as it is a monomer unit having a hydrophilic group. A monomer for deriving the hydrophilic monomer unit A₂ is also referred to as a monomer A₂.

From a viewpoint of the solubility into neutral water and a viewpoint of the easiness of the polymerization when producing the polyamide resin, examples of the hydrophilic group are at least one type selected from the group consisting of a primary amino group, a secondary amino group, a tertiary amino group, a quaternary ammonium salt group, an oxyethylene group, a hydroxyl group, a carboxyl group, a carboxyl salt group, a phosphoric acid group, a phosphate group, a sulfonic acid group, and a sulfonate group.

From a viewpoint of the solubility into neutral water and a viewpoint of the easiness of the polymerization when producing the polyamide resin, the secondary amino group is preferably at least one type selected from the group consisting of a secondary amino group represented by -NHR⁹ (R⁹ represents a straight chain or branched alkyl group having 1 to 14 carbon atoms) and a secondary amino group represented by -NH-.

From a viewpoint of the solubility into neutral water and a viewpoint of the easiness of the polymerization when producing the polyamide resin, the tertiary amino group is preferably at least one type selected from the group consisting of a tertiary amino group represented by -NR¹⁰R¹¹ (R¹⁰ represents a straight chain or branched alkyl group having 1 to 14 carbon atoms and R¹¹ represents a straight chain or branched alkyl group having 1 to 14 carbon atoms) and a tertiary amino group represented by -NR¹²- (R¹² represents a straight chain or branched alkyl group having 1 to 14 carbon atoms).

From a viewpoint of the solubility into neutral water and a viewpoint of the easiness of the polymerization when producing the polyamide resin, the quaternary ammonium salt group is preferably at least one type selected from the group consisting of a quaternary ammonium salt group represented by -N⁺{R¹³R¹⁴R¹⁵} · X⁻ (Each of R¹³, R¹⁴, and R¹⁵ represents a hydrogen atom or an alkyl group having 1 to 14 carbon atoms and X⁻ represents a hydroxy ion, a halogen ion, CH₃SO₄⁻, or CH₃CH₂SO₄⁻).

From a viewpoint of the solubility into neutral water and a viewpoint of the easiness of the polymerization when producing the polyamide resin, the oxyethylene group is preferably at least one type selected from the group consisting of an oxyethylene group represented by -{CH₂CH₂O}ₙ₂- (n2 represents an average number and it is an integer of 1 to 2,500, preferably 2 to 1,000, more preferably 3 to 100, and further preferably 4 to 50) and an oxyethylene group represented by -{CH₂CH₂O}ₘ₂-R¹⁶ (m2 represents an average number and it is an integer of 1 to 2,500, preferably 2 to 1,000, more preferably 3 to 100, and further preferably 4 to 50. R¹⁶ represents a hydrogen atom or a straight chain or branched alkyl group having 1 to 10 carbon atoms and it is more preferably 2 to 6 and further preferably 3 to 5).

From a viewpoint of the solubility into neutral water and a viewpoint of the easiness of the polymerization when producing the polyamide resin, the carboxyl salt group is preferably a carboxyl salt group represented by -COOM⁴ (M⁴ represents a counterion of a carboxyl group constituting the carboxyl salt group; and from a viewpoint of the solubility into neutral water, it is preferably at least one type selected from the group consisting of a sodium ion, a potassium ion, a lithium ion, calcium ion, a magnesium ion, an ammonium ion, a barium ion, and a zinc ion; more preferably at least one type selected from the group consisting of a sodium ion, a potassium ion, a lithium ion, a magnesium ion, and an ammonium ion; further preferably at least one type selected from the group consisting of a sodium ion and a potassium ion; and further more preferably a sodium ion).

From a viewpoint of the solubility into neutral water and a viewpoint of the easiness of the polymerization when producing the polyamide resin, the phosphate group is preferably at least one type selected from the group consisting of a phosphate group represented by -PO₄M⁵₂, -PO₄HM⁵, and -PO₄M⁵ (M⁵ represents a counterion of a phosphoric acid group constituting the phosphate group; and from a viewpoint of the solubility into neutral water, it is preferably at least one type selected from the group consisting of a sodium ion, a potassium ion, a lithium ion, calcium ion, a magnesium ion, an ammonium ion, a barium ion, and a zinc ion; more preferably at least one type selected from the group consisting of a sodium ion, a potassium ion, a lithium ion, a magnesium ion, and an ammonium ion; further preferably at least one type selected from the group consisting of a sodium ion and a potassium ion; and further more preferably a sodium ion).

From a viewpoint of the solubility into neutral water and a viewpoint of the easiness of the polymerization when producing the polyamide resin, the sulfonate group is preferably a sulfonate group represented by -SO₃M⁶ (M⁶ represents a counterion of a sulfonic acid group constituting the sulfonate group; and from a viewpoint of the solubility into neutral water, it is preferably at least one type selected from the group consisting of a sodium ion, a potassium ion, a lithium ion, calcium ion, a magnesium ion, an ammonium ion, a barium ion, and a zinc ion; more preferably at least one type selected from the group consisting of a sodium ion, a potassium ion, a lithium ion, a magnesium ion, and an ammonium ion; further preferably at least one type selected from the group consisting of a sodium ion and a potassium ion; and further more preferably a sodium ion).

From a viewpoint of the solubility into neutral water, a viewpoint of moisture absorption resistance, a viewpoint of heat resistance required for modeling by a 3D printer, and a viewpoint of the easiness of the polymerization when producing the polyamide resin, the monomer A₂ is preferably at least one type selected from the group consisting of carboxylic acid, amine, and amino acid, and more preferably carboxylic acid. Among the type of carboxylic acid, from the same viewpoints, aromatic carboxylic acid is preferable; and at least one type selected from the group consisting of hydroxy group-containing aromatic dicarboxylic acid, primary amino group-containing aromatic dicarboxylic acid, sulfonic acid group-containing aromatic dicarboxylic acid, and sulfonate group-containing aromatic dicarboxylic acid are more preferable. Among those, from the same viewpoints, at least one type selected from the group consisting of 5-hydroxyisophthalic acid, 1,3,5-benzene tricarboxylic acid, 5-aminoisophthalic acid, 5-sulfoisophthalic acid, 2-sulfoterephthalic acid, and 4-sulfo-2,6-naphthalene dicarboxylic acid are preferable; at least one type selected from the group consisting of 5-sulfoisophthalic acid and 2-sulfoterephthalic acid are more preferable; and 5-sulfoisophthalic acid is further preferable.

From a viewpoint of the solubility into neutral water, the content of the hydrophilic group in the polyamide resin is preferably 0.5 mmol/g or more, more preferably 0.6 mmol/g or more, and further preferably 0.7 mmol/g or more; and from a viewpoint of moisture absorption resistance, it is preferably 3.0 mmol/g or less, more preferably 2.0 mmol/g or less, and further preferably 1.5 mmol/g or less. From the viewpoint of the solubility into neutral water and the viewpoint of moisture absorption resistance, the content of the hydrophilic group in the polyamide resin is preferably 0.5 mmol/g to 3.0 mmol/g, more preferably 0.6 mmol/g to 2.0 mmol/g, and further preferably 0.7 mmol/g to 1.5 mmol/g.

From a viewpoint of the solubility into neutral water, the ratio of the amount of the hydrophilic monomer unit A₂ to the total amount of monomer units in the polyamide resin is 2.5 mol% or more, preferably 4 mol% or more, more preferably 6 mol% or more, further preferably 8 mol% or more, and further more preferably 10 mol% or more; and from a viewpoint of moisture absorption resistance, it is 40 mol% or less, preferably 35 mol% or less, more preferably 31 mol% or less, further preferably 25 mol% or less, further more preferably 20 mol% or less, especially preferably 15 mol% or less, more especially preferably 10 mol% or less, and more especially preferably 8 mol% or less. From the viewpoint of the solubility into neutral water and from the viewpoint of moisture absorption resistance, the ratio of the amount of the hydrophilic monomer unit A₂ to the total amount of monomer units in the polyamide resin is preferably 2.5 mol% to 40 mol%, more preferably 4 mol% to 35 mol%, further preferably 6 mol% to 31 mol%, further more preferably 8 mol% to 20 mol%, especially preferably 8 mol% to 15 mol%, and more especially preferably 8 mol% to 12 mol%.

### <Hydrophobic Dicarboxylic Acid Monomer Unit B₂>

The polyamide resin has a hydrophobic dicarboxylic acid monomer unit B₂. The dicarboxylic acid monomer unit B₂ does not have a hydrophilic group. In the present specification, dicarboxylic acid for deriving the hydrophobic dicarboxylic acid monomer unit B₂ is also referred to as dicarboxylic acid B₂.

The dicarboxylic acid B₂ is not particularly limited as long as it is dicarboxylic acid. However, from a viewpoint of the solubility into neutral water, a viewpoint of moisture absorption resistance, a viewpoint of heat resistance required for modeling by a 3D printer, and a viewpoint of the easiness of the polymerization when producing the polyamide resin, the dicarboxylic acid B₂ is preferably at least one type selected from the group consisting of aromatic dicarboxylic acid, aliphatic dicarboxylic acid, and alicyclic dicarboxylic acid. Among these, from the same viewpoints, at least one type selected from the group consisting of terephthalic acid, isophthalic acid, 2,5-furan dicarboxylic acid, 2,6-naphthalene dicarboxylic acid, 1,4-cyclohexane dicarboxylic acid, and 1,3-adamantane dicarboxylic acid are more preferable; and at least one type selected from the group consisting of terephthalic acid, 2,5-furan dicarboxylic acid, and 2,6-naphthalene dicarboxylic acid are further preferable; terephthalic acid is further more preferable.

From a viewpoint of moisture absorption resistance, the ratio of the amount of the hydrophobic dicarboxylic acid monomer unit B₂ in the polyamide resin to the total amount of monomer units in the polyamide resin is preferably 10 mol% or more, more preferably 20 mol% or more, further preferably 30 mol% or more, further more preferably 35 mol% or more, especially preferably 40 mol% or more, and more especially preferably 42 mol% or more; and from a viewpoint of the solubility into neutral water, it is preferably 47.5 mol% or less, more preferably 45 mol% or less, further preferably 42 mol% or less, and further more preferably 40 mol% or less. From the viewpoint of moisture absorption resistance and the viewpoint of the solubility into neutral water, the ratio of the amount of the hydrophobic dicarboxylic acid monomer unit B₂ in the polyamide resin to the total amount of monomer units in the polyamide resin is preferably 10 mol% to 47.5 mol%, more preferably 20 mol% to 45 mol%, and further preferably 30 mol% to 42 mol%.

From the viewpoints of the solubility into neutral water, moisture absorption resistance, and heat resistance required for modeling by a 3D printer, the mole ratio of the hydrophilic monomer unit A₂ to the hydrophobic dicarboxylic acid monomer unit B₂ (hydrophilic monomer unit A₂ / hydrophobic dicarboxylic acid monomer unit B₂) is preferably 10/90 or more, more preferably 15/85 or more, further preferably 18/82 or more, and further more preferably 20/80 or more; and from the same viewpoints, it is preferably 50/50 or less, more preferably 40/60 or less, further preferably 30/70 or less, and further more preferably 25/75 or less.

### <Hydrophobic Diamine Monomer Unit>

The polyamide resin has a hydrophobic diamine monomer unit. The hydrophobic diamine monomer unit does not have a hydrophilic group. The diamine for deriving the hydrophobic diamine monomer unit is also referred to as diamine C.

The diamine C is not particularly limited, and at least one type selected from the group consisting of aliphatic diamine, alicyclic diamine, and aromatic diamine can be used. However, from a viewpoint of the easiness of the polymerization when producing the polyamide resin, the diamine C is preferably aliphatic diamine.

From the viewpoints of the solubility into neutral water, moisture absorption resistance, heat resistance required for modeling by a 3D printer, and easiness of the polymerization when producing the polyamide resin, the number of carbon atoms in the diamine C is preferably 2 or more, more preferably 3 or more, and further preferably 4 or more; and from the viewpoints of the solubility into neutral water, moisture absorption resistance, and heat resistance required for modeling by a 3D printer, it is preferably 20 or less, more preferably 15 or less, and further preferably 10 or less.

Examples of the aliphatic diamine include ethylenediamine, trimethylenediamine, tetramethylenediamine, pentamethylenediamine, hexamethylenediamine, heptamethylenediamine, octamethylenediamine, nonanediamine, and decanediamine. Among these, from the viewpoints of the solubility into neutral water, moisture absorption resistance, and toughness (strength) required for modeling by a 3D printer, hexamethylenediamine is preferable.

Examples of the alicyclic diamine include 4,4'-diamino-3,3'-dimethyldicyclohexylmethane, diamine cyclohexane, and isophoronediamine. Among these, from the viewpoints of the solubility into neutral water, moisture absorption resistance, and toughness (strength) required for modeling by a 3D printer, at least one type selected from the group consisting of diaminecyclohexane and isophoronediamine is preferable and at least one type selected from the group consisting of diaminecyclohexane is more preferable.

Examples of the aromatic diamine include phenylene diamine, diethyltoluenediamine, and 4,4'-diaminophenylmethane. Among these, from the viewpoints of the solubility into neutral water, moisture absorption resistance, and toughness (strength) required for modeling by a 3D printer, at least one type selected from the group consisting of phenylene diamine and diethyltoluenediamine is preferable and at least one type selected from the group consisting of phenylenediamine is more preferable.

From the viewpoints of the solubility into neutral water, moisture absorption resistance, and toughness (strength) required for modeling by a 3D printer, the diamine C is preferably at least one type selected from the group consisting of hexamethylenediamine, diaminecyclohexane, and phenylenediamine, more preferably at least one type selected from the group consisting of hexamethylenediamine and phenylenediamine, and further preferably hexamethylene diamine.

If the diamine C is at least one type selected from the group consisting of hexamethylenediamine, diaminecyclohexane, and phenylenediamine; from the viewpoints of the solubility into neutral water, moisture absorption resistance, and heat resistance required for modeling by a 3D printer; the ratio of the total amount of hexamethylenediamine, diaminecyclohexane, and phenylenediamine to the total amount of all diamine monomer units in the polyamide resin is preferably 50 mol% or more, more preferably 70 mol% or more, further preferably 80 mol% or more, further more preferably 90 mol% or more, especially preferably substantially 100 mol%, and more especially preferably 100 mol%. "Substantially 100 mol%" means that a case is included in which substances other than hexamethylenediamine, diaminecyclohexane, and phenylenediamine are inevitably mixed in the diamine C.

Examples of the polyamide resin can be shown in the following formulas (3) to (8).

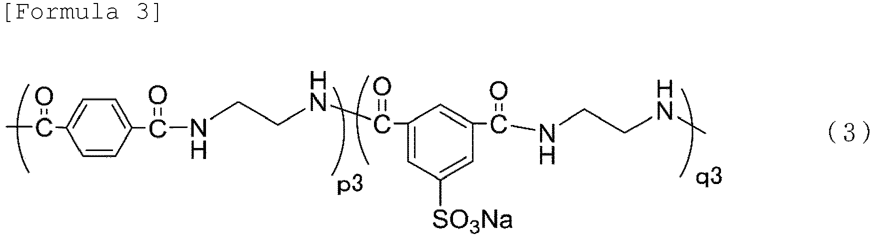

(In the formula (3), p3 and q3 represent the number-average degree of polymerization respectively. The polymer may be a block copolymer or a random copolymer; and from a viewpoint of the solubility into neutral water, the polymer is preferably a random copolymer.)

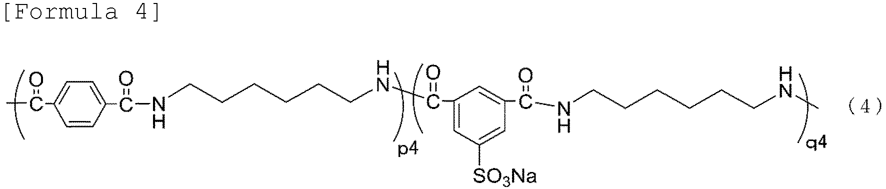

(In the formula (4), p4 and q4 represent the number-average degree of polymerization respectively. The polymer may be a block copolymer or a random copolymer; and from a viewpoint of the solubility into neutral water, the polymer is preferably a random copolymer.)

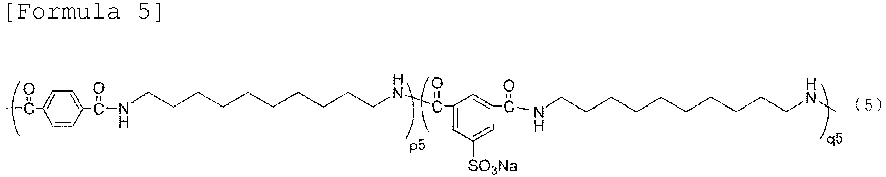

(In the formula (5), p5 and q5 represent the number-average degree of polymerization respectively. The polymer may be a block copolymer or a random copolymer; and from a viewpoint of the solubility into neutral water, the polymer is preferably a random copolymer.)

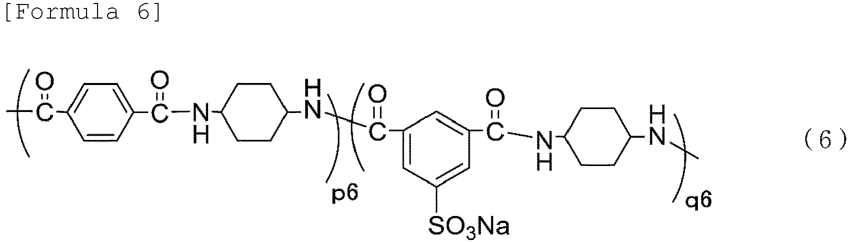

(In the formula (6), p6 and q6 represent the number-average degree of polymerization respectively. The polymer may be a block copolymer or a random copolymer; and from a viewpoint of the solubility into neutral water, the polymer is preferably a random copolymer.)

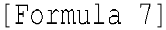

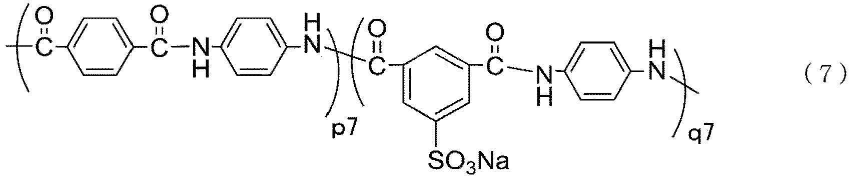

(In the formula (7), p7 and q7 represent the number-average degree of polymerization respectively. The polymer may be a block copolymer or a random copolymer; and from a viewpoint of the solubility into neutral water, the polymer is preferably a random copolymer.)

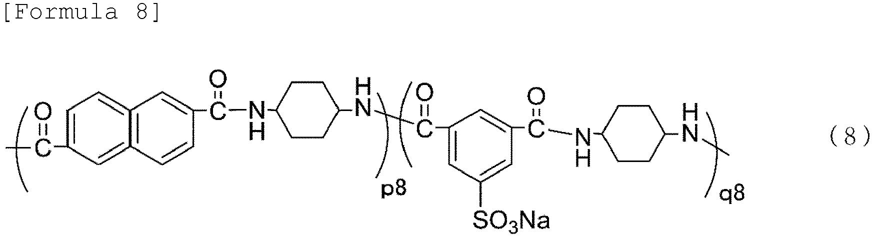

(In the formula (8), p8 and q8 represent the number-average degree of polymerization respectively. The polymer may be a block copolymer or a random copolymer; and from a viewpoint of the solubility into neutral water, the polymer is preferably a random copolymer.)

The polyamide resin may have monomer unit other than the monomer unit A₂, the dicarboxylic acid monomer unit B₂, and diamine monomer unit C as long as the effect of the present embodiment is not impaired.

The method for manufacturing the polyamide resin is not particularly limited and a conventionally known method for manufacturing a polyamide resin can be applied.

The polyester resin and the polyamide resin can be removed by neutral water with pH of 6 to 8 that is not a strong alkaline aqueous solution and has a high melting point. However, these resins tend to have poor compatibility with the elastomer compared to the resins generally used as the base polymer of the soluble material for three-dimensional modeling because these resins have a hydrophilic group. According to the method for manufacturing a soluble material for three-dimensional modeling of the present embodiment, the elastomer is dispersed sufficiently in the soluble material for three-dimensional modeling to obtain the effect of designing the material by using the elastomer and to improve the toughness even when the polyester resin with a hydrophilic group and/or the polyamide resin with a hydrophilic group are used as a raw material of the soluble material for three-dimensional modeling. Therefore, a soluble material for three-dimensional modeling can be provided having excellent mechanical characteristics and that does not break easily even if the material is provided as a filament.

From a viewpoint of improving the toughness required for the soluble material for three-dimensional modeling, the weight average molecular weight of the base polymer is preferably 3,000 or more, more preferably 3,500 or more, further preferably 4,000 or more; from a viewpoint of the solubility into neutral water and a viewpoint of the modeling property by a 3D printer, the weight average molecular weight of the base polymer is preferably 70,000 or less, more preferably 50,000 or less, further preferably 30,000 or less, further more preferably 20,000 or less. In the present specification, the weight average molecular weight is obtained with a method described in the example.

From a viewpoint of the modeling property by a 3D printer, the glass transition temperature (TG) of the base polymer is 50°C or higher, preferably 60°C or higher, more preferably 70°C or higher, and further preferably 80°C or higher; and from the same viewpoint, the glass transition temperature of the base polymer is 250°C or lower, preferably 220°C or lower, more preferably 180°C or lower, further preferably 160°C or lower, further more preferably 140°C or lower, and further more preferably 120°C or lower. In the present specification, the glass transition temperature is obtained with a method described in the example.

From a viewpoint of the fluidity of the resin, a melt flow rate of the base polymer is preferably 1.0 g/10 min or more, more preferably 1.5 g/10 min or more, further preferably 2.0 g/10 min or more, and further more preferably 2.5 g/10 min or more; and from a viewpoint of the toughness of the resin, the melt flow rate of the base polymer is preferably 10 g/10 min or less, more preferably 7 g /10 min or less, further preferably 6 g /10 min or less, and further more preferably 5 g/10 min or less. In the present specification, the melt flow rate is measured with a method described in the example.

From a viewpoint of the modeling property by a 3D printer, the mixing ratio of the base polymer to the soluble material for three-dimensional modeling is preferably 70% by mass or more and more preferably 80% by mass or more. The mixing ratio of the base polymer to the soluble material for three-dimensional modeling is preferably 95% by mass or less and more preferably 90% by mass or less.

### [Compatibilizer]

The compatibilizer is not limited as long as it is a compatibilizer that can be used in the soluble material for three-dimensional modeling according to the FDM system. However, from a viewpoint of the modeling property by a 3D printer and a viewpoint of improving the toughness of the soluble material for three-dimensional modeling, the compatibilizer is preferably a compatibilizer containing at least one type or more of the reactive groups selected from the group consisting of an epoxy group, an acid anhydride group, an isocyanate group, an amino group, a carboxyl group, and an oxazoline group; and more preferably a reactive compatibilizer having an epoxy group. Examples of the reactive compatibilizer having an epoxy group include Bondfast™ 7B and Bondfast™ 7M (manufactured by Sumitomo Chemical Co., Ltd.) ; LOTADER™ AX8840 (manufactured by Arkema Inc.); JONCRYL™ ADR4370S, JONCRYL ADR4368CS, JONCRYL ADR4368F, and JONCRYL ADR4300S (manufactured by BASF SE); and ARUFON™ UG4035, ARUFON UG4040, and ARUFON UG4070 (manufactured by Toagosei Co., Inc.) Examples of the reactive compatibilizer having an acid anhydride group include UMEX™ 1010 (manufactured by Sanyo Chemical Industries, Ltd.); Admer™ (manufactured by Mitsui Chemical, Inc.); MODIPER™ A8200 (manufactured by NOF Corporation); OREVAC™ (manufactured by Arkema S.A.); FG1901 and FG1924 (manufactured by Kraton Corporation); and Tuftec™ M1911, Tuftec M1913, and Tuftec M1943 (manufactured by Asahi Kasei Corporation). An example of the reactive compatibilizer having an isocyanate group includes CARBODILITE LA-1™ (manufactured by Nisshinbo Chemical Inc.)

From a viewpoint of the modeling property by a 3D printer, the mixing ratio of the compatibilizer to 100 parts by mass of the base polymer is preferably 2 parts by mass or more and more preferably 3 parts by mass or more. The mixing ratio of the compatibilizer to 100 parts by mass by the base polymer is preferably 20 parts by mass or less and more preferably 10 parts by mass or less.

### [Elastomer]

The elastomer is not limited as long as it is an elastomer that can be used in the soluble material for three-dimensional modeling according to the FDM system. However, from a viewpoint of the modeling property by a 3D printer and a viewpoint of improving the toughness of the soluble material for three-dimensional modeling, the elastomer is preferably an elastomer containing at least one type or more selected from the group consisting of an acrylic elastomer, an olefin elastomer, a styrene elastomer, a polyester elastomer, a urethane elastomer, a polyamide elastomer, and a silicone elastomer; and more preferably an acrylic elastomer. Examples of the acrylic elastomer include KURARITY™ LA2250, KURARITY™ LA2140, KURARITY™ LA4285 (manufactured by Kuraray Co., Ltd.) . An example of the olefin elastomer includes a Kraton™ ERS polymer (manufactured by Kraton Corporation) . Examples of the styrene elastomer include a Kraton A polymer and a Kraton G polymer (Manufactured by Kraton Corporation); Tuftec H series and Tuftec P series (manufactured by Asahi Kasei Corporation); and SEPTON™ and HYBRAR™ (manufactured by Kuraray Co., Ltd.) .

From a viewpoint of the modeling property by a 3D printer, the mixing ratio of the elastomer to 100 parts by mass of the base polymer is preferably 5 parts by mass or more and more preferably 10 parts by mass or more. The mixing ratio of the elastomer to 100 parts by mass of the base polymer is preferably 40 parts by mass or less and more preferably 30 parts by mass or less.

The raw material of the composition of the agent for treating a precursor of a three-dimensional object may contain water, a water-soluble organic solvent, a filler, a thickener, a pH adjusting agent, a preservative, a rust preventive agent, a pigment, a coloring agent, etc. as necessary in a range without impairing the effects of the present embodiment.

### [Kneading Step]

The method for manufacturing a soluble material for three-dimensional modeling of the present embodiment has a kneading step of kneading raw materials of the soluble material for three-dimensional modeling by a twin screw extruder having a screw configuration in which a ratio of a total length K of kneading discs to a total length L of an effective screw is 0.20 < K/L < 0.70. In the present specification, the effective screw means a screw having the functions such as transferring, shearing, and compressing powder; and includes kneading discs. In the present specification, the total length L of the effective screw means a total length of the screw having the functions such as transferring, shearing, and compressing powder, and specifically it is the length from the hopper part to the tip of the screw. The total length of the kneading discs is the total length of the kneading discs in the axial direction.

The method of feeding the raw materials of the soluble material for three-dimensional modeling to the twin screw extruder is not particularly limited, and examples thereof include a method of feeding the previously mixed raw material to the twin screw extruder by a feeder and a method of feeding each component of the raw material separately to the twin screw extruder by a feeder.

The form of the raw material for the soluble material for three-dimensional modeling fed to the twin screw extruder may be any of powder, fine particles, flakes, and pellets.

A screw-shaped full flight screw part that is a feeding part and the kneading disc part are combined together to form a kneading element of the screw. Examples of the shape of the kneading disc include a forward twist shape, a reverse twist shape, an orthogonal shape, and a neutral shape. Examples of the other parts including the full flight screw include a forward lead, a reverse lead, a seal ring, and a pineapple screw. There are a double type screw and a triple type screw depending on threading. A double type or a triple type may be used for the kneading disc. The arrangements of the full flight screw and the kneading disc are not particularly limited.

From a viewpoint of the dispersibility of the elastomer, the ratio of the total length K of the kneading discs to the total length L of the effective screw of the twin screw extruder that kneads the raw material of the soluble material for three-dimensional modeling (K/L) is larger than 0.20, preferably larger than 0.25, and more preferably larger than 0.30. From a viewpoint of a productivity, the ratio of the total length K of the kneading discs to the total length L of the effective screw of the twin screw extruder that kneads the raw materials of the soluble material for three-dimensional modeling (K/L) is smaller than 0.70, preferably smaller than 0.60, more preferably smaller than 0.50, and further preferably smaller than 0.40. From the viewpoints of the dispersibility of the elastomer and the productivity, the ratio of the total length K of the kneading discs to the total length L of the effective screw of the twin screw extruder that kneads the raw materials of the soluble material for three-dimensional modeling (K/L) is 0.20 < (K/L) < 0.70, preferably 0.25 < (K/L) < 0.60, more preferably 0.30 < (K/L) < 0.5, and further preferably 0.30 < (K/L) < 0.4.

From a viewpoint of improving the dispersibility of the elastomer, the ratio of the total length L of the effective screw to the diameter D of the screw of the twin screw extruder that kneads the raw materials of the soluble material for three-dimensional modeling (L/D) is larger than 25, preferably larger than 27, and more preferably larger than 30. From a viewpoint of suppressing the decomposition and the deterioration of the raw materials of the soluble material for three-dimensional modeling, the ratio of the total length L of the effective screw to the diameter D of the screw of the twin screw extruder that kneads the raw materials of the soluble material for three-dimensional modeling (L/D) is preferably smaller than 120, more preferably smaller than 100, and further preferably smaller than 80. From the viewpoints of improving the dispersibility of the elastomer and suppressing the decomposition and the deterioration of the raw materials of the soluble material for three-dimensional modeling, the ratio of the total length L of the effective screw to the diameter D of the screw of the twin screw extruder that kneads the raw materials of the soluble material for three-dimensional modeling (L/D) is 25 < (L/D), preferably 25 < (L/D) < 120, more preferably 27 < (L/D) < 100, and further preferably 30 < (L/D) < 80.

From a viewpoint of improving the dispersibility of the elastomer, the temperature Tₘᵢₓ of the raw material of the soluble material for three-dimensional modeling in the kneading step with respect to the glass transition temperature T_{g} of the base polymer contained in the raw materials of the soluble material for three-dimensional modeling is higher than T_{g} + 80 (°C), preferably higher than T_{g} + 90 (°C), more preferably higher than T_{g} + 100 (°C), further preferably higher than T_{g} + 110 (°C), further more preferably higher than T_{g} + 120 (°C), and particularly preferably higher than T_{g} + 130 (°C). From a viewpoint of suppressing the decomposition and the deterioration of the raw materials of the soluble material for three-dimensional modeling, the temperature Tₘᵢₓ of the raw materials of the soluble material for three-dimensional modeling in the kneading step with respect to the glass transition temperature T_{g} of a base polymer contained in the raw materials of the soluble material for three-dimensional modeling is lower than T_{g} + 200 (°C), preferably lower than T_{g} + 190 (°C), more preferably lower than T_{g} + 180 (°C), and further preferably lower than T_{g} + 170 (°C). From the viewpoint of improving the dispersibility and suppressing the decomposition and the deterioration of the raw materials of the soluble material for three-dimensional modeling, the temperature Tₘᵢₓ of the raw materials of the soluble material for three-dimensional modeling in the kneading step with respect to the glass transition temperature T_{g} of a base polymer contained in the raw materials of the soluble material for three-dimensional modeling is T_{g} + 80 (°C) < Tₘᵢₓ < 200 (°C), preferably T_{g} + 90 (°C) < Tₘᵢₓ < T_{g} + 190 (°C), more preferably T_{g} + 100 (°C) < Tₘᵢₓ < T_{g} + 180 (°C), further preferably T_{g} + 110 (°C) < Tₘᵢₓ < T_{g} + 170 (°C), further more preferably T_{g} + 120 (°C) < Tₘᵢₓ < T_{g} + 170 (°C), and particularly preferably T_{g} + 130 (°C) < Tₘᵢₓ < T_{g} + 170 (°C) .

### <Soluble Material for Three-Dimensional Modeling>

From a viewpoint of the modeling property by a 3D printer, the glass transition temperature (TG) of the soluble material for three-dimensional modeling is preferably 50°C or higher, more preferably 60°C or higher, further preferably 70°C or higher, and further more preferably 80°C or higher; and from the same viewpoint, the glass transition temperature of the soluble material for three-dimensional modeling is preferably 250°C or lower, more preferably 220°C or lower, further preferably 180°C or lower, further more preferably 160°C or lower, further more preferably 140°C or lower, and further more preferably 120°C or lower.

From a viewpoint of the fluidity of the resin, a melt flow rate of the soluble material for three-dimensional modeling is preferably 1.0 g/10 min or more, more preferably 1.5 g/10 min or more, further preferably 2.0 g/10 min or more, and further more preferably 2.5 g/10 min or more; and from a viewpoint of the toughness of the resin, the melt flow rate of the soluble material for three-dimensional modeling is preferably 10 g/10 min or less, more preferably 7 g /10 min or less, further preferably 6 g /10 min or less, and further more preferably 5 g/10 min or less.

From a viewpoint of improving the toughness required for the soluble material for three-dimensional modeling, the average particle size of the elastomer in the soluble material for three-dimensional modeling is preferably 2.5 µm or less, more preferably 2.0 µm or less, further preferably 1.7 µm or less, and further more preferably 1. 4 µm or less. In the present specification, the average particle size of the elastomer in the soluble material for three-dimensional modeling is measured with a method described in the example.

### [Filament]

The soluble material for three-dimensional modeling manufactured with the method for manufacturing a soluble material for three-dimensional modeling is formed in a filament and used in the production of a three-dimensional object.

From a viewpoint of the modeling property by a 3D printer and a viewpoint of improving the modeling accuracy of a three-dimensional object, the diameter of the filament is preferably 0.5 mm or more, and more preferably 1.0 mm or more; from the same viewpoints, the diameter of the filament is preferably 3.0 mm or less, more preferably 2.0 mm or less, and further preferably 1.8 mm or less. From a viewpoint of enhancing the toughness, a drawing process is preferably performed to produce a filament. From a viewpoint of improving the toughness while maintaining solubility, the draw ratio is preferably 1.5 times or more, more preferably 2 times or more, further preferably 3 times or more, further more preferably 5 times or more; and from the same viewpoint, the draw ratio is preferably 200 times or less, more preferably 150 times or less, further preferably 100 times or less, and further more preferably 50 times or less. The drawing temperature is preferably in a range of a temperature from 20°C lower than the glass transition temperature of the soluble material for three-dimensional modeling to 110°C higher than the glass transition temperature. From a viewpoint of improving the toughness and a viewpoint of thermal stability, the lower limit of the drawing temperature is more preferably 10°C lower than the glass transition temperature, and further preferably same as the glass transition temperature. From the same viewpoints, the upper limit of the drawing temperature is more preferably 110°C higher than the glass transition temperature, further preferably 100°C higher than the glass transition temperature, and further more preferably 90°C higher than the glass transition temperature. The drawing may be performed while air cooling when the resin is discharged from the extruder or the resin may be heated by hot air or a laser. The drawing may be performed in one stage to a prescribed filament diameter at a prescribed draw ratio or multiple stages to a prescribed filament diameter at a prescribed draw ratio.

### <Method for manufacturing three-dimensional object>

The method for manufacturing a three-dimensional object of the present embodiment is a method for manufacturing a three-dimensional object by fused deposition modeling, and includes a step of obtaining a precursor of a three-dimensional object containing the three-dimensional object and a support material, and a support material removing step of making the precursor of the three-dimensional object contact a neutral water to remove the support material. The raw material of the support material is the soluble material for three-dimensional modeling manufactured by the method for manufacturing a soluble material for three-dimensional modeling.

### [Step of Obtaining Precursor of Three-Dimensional Object containing Three-Dimensional Object and Support Material]

A step of obtaining a precursor of a three-dimensional object containing the three-dimensional object and a support material by a 3D printer of the known fused deposition modeling system can be used as the step of obtaining a precursor of a three-dimensional object containing the three-dimensional object and a support material except that the material of the support material is the soluble material for three-dimensional modeling manufactured by the method for manufacturing a soluble material for three-dimensional modeling. The soluble material for three-dimensional modeling manufactured by the method for manufacturing a soluble material for three-dimensional modeling, that is the material of the support material, is formed into a filament and fed to a 3D printer.

The modeling material that is a material of the three-dimensional object is not particularly limited as long as the modeling material is a resin that can be used as a modeling material in the method for manufacturing a three-dimensional object of a conventional FDM system. Examples of the modeling material include thermoplastic resins such as an ABS resin, a polylactate resin, a polycarbonate resin, 12-nylon, 6,6-nylon, 6-nylon, a polyphenylsulfone resin, polyetheretherketone, and polyetherimide. Among these, from a viewpoint of the modeling property by a 3D printer, an ABS resin and/or a polylactate resin are more preferable, and an ABS resin is further preferable.

### [Support material removing step of making precursor of three-dimensional object contact the neutral water to remove support material]

The precursor of the three-dimensional object is made to contact a neutral water to remove the support material in the support material removing step. The method of making the precursor of the three-dimensional object contact the neutral water is preferably a method of soaking the precursor of the three-dimensional object in the neutral water from the viewpoints of cost and ease of work. From the viewpoint of improving removability of the support material, the precursor of the three-dimensional object is irradiated with ultrasonic waves while being soaked in the neutral water to promote dissolution of the support material.

Examples of the neutral water include ion exchange water, pure water, tap water, and industrial water. From the viewpoint of economy, ion exchange water and tap water are preferred. The neutral water may contain a water-soluble organic solvent as far as the solvent does not damage the resultant modeled three-dimensional object. Examples of the water-soluble organic solvent include lower alcohols such as methanol, ethanol, and 2-propanol; glycol ethers such as propylene glycol monomethyl ether, ethylene glycol monoethyl ether, ethylene glycol mono-t-butyl ether, and diethylene glycol monobutyl ether; and ketones such as acetone, and methyl ethyl ketone. When the neutral water contains the water-soluble organic solvent, the content of the water-soluble organic solvent in the neutral water is preferably 0.1% or more by mass, more preferably 0.5% or more by mass, even more preferably 1% or more by mass, even more preferably 3% or more by mass, and is preferably 50% or less by mass, preferably 40% or less by mass, preferably 30% or less by mass, preferably 20% or less by mass.

The amount of the neutral water used is preferably 10 mass times or more, and more preferably 20 mass times or more the support material from the viewpoint of the solubility of the support material. The amount of the neutral water used is preferably 10, 000 mass times or less, more preferably 5, 000 mass times or less, further preferably 1, 000 mass times or less, and further preferably 100 mass times or less the support material from the economic viewpoint.

The period over which the soluble material for three-dimensional modeling is caused to contact the neutral water is preferably 5 minutes or longer from the viewpoint of the removability of the support material, and is preferably 180 minutes or shorter, more preferably 120 minutes or shorter, even more preferably 90 minutes or shorter from the viewpoint of economy, and a decrease of damage which the three-dimensional object suffers through the contact of the object with the neutral water over a long period. The washing temperature, which depends on the species of the modeling material, is preferably 15°C or higher, more preferably 25°C or higher, even more preferably 30°C or higher, even more preferably 40°C or higher from the viewpoint of economy, the removability of the support material, and a decrease of damage which the three-dimensional object suffers. From the same viewpoint, the temperature is preferably 85°C or lower, more preferably 70°C or lower, and even more preferably 60°C or lower.

### <Support Material>

The support material of the present embodiment is a support material that supports a three-dimensional object when the three-dimensional object is manufactured by a 3D printer of a fused deposition modeling system and the raw material of the support material is the soluble material for three-dimensional modeling manufactured by the method for manufacturing a soluble material for three-dimensional modeling.

The present specification further discloses the following manufacturing method related to the above-described embodiment.
<1> A method for manufacturing a soluble material for three-dimensional modeling that is used as a material of a support material that supports a three-dimensional object when manufacturing the three-dimensional object with a 3D printer of a fused deposition modeling system, comprising a kneading step of kneading raw materials of the soluble material for three-dimensional modeling by a twin screw extruder having a screw configuration in which a ratio of a total length K of kneading discs to a total length L of an effective screw is 0.20 < K/L < 0.70 and in which a temperature Tₘᵢₓ of the raw materials of the soluble material for three-dimensional modeling in the kneading step and a glass transition temperature T_{g} of a base polymer contained in the raw materials of the soluble material for three-dimensional modeling satisfy a formula T_{g} + 80 (°C) < Tₘᵢₓ < T_{g} + 200 (°C) .
<2> The method for manufacturing the soluble material for three-dimensional modeling according to <1>, wherein the raw materials of the soluble material for three-dimensional modeling contain a base polymer, an elastomer, and a compatibilizer.
<3> The method for manufacturing the soluble material for three-dimensional modeling according to <1> or <2>, wherein the base polymer is preferably at least one member selected from the group consisting of polyvinyl alcohol, polyoxazoline, polyacrylamide, an acrylate (co)polymer, a methacrylate (co)polymer, a polyester resin, a polyamide resin, and a methacrylic resin.
<4> The method for manufacturing the soluble material for three-dimensional modeling according to any one of <1> to <3>, wherein the base polymer is preferably a resin having a hydrophilic group, more preferably a polyester resin having a hydrophilic group and/or a polyamide resin having a hydrophilic group.
<5> The method for manufacturing the soluble material for three-dimensional modeling according to any one of <1> to <4>, wherein the polyester resin having a hydrophilic group has a hydrophilic monomer unit A₁ having a hydrophilic group, a hydrophobic dicarboxylic acid monomer unit B₁, and a diol monomer unit; wherein a ratio of the hydrophilic monomer unit A₁ to a total amount of the hydrophilic monomer unit A₁ having a hydrophilic group and the hydrophobic dicarboxylic acid monomer unit B₁ in the polyester resin is 10 mol% to 70 mol%.
<6> The method for manufacturing the soluble material for three-dimensional modeling according to any one of <1> to <5>, wherein a monomer A₁ for deriving the hydrophilic monomer unit A₁ is more preferably at least one type selected from the group consisting of hydroxy group-containing aromatic dicarboxylic acid, primary amino group-containing aromatic dicarboxylic acid, sulfonic acid group-containing aromatic dicarboxylic acid, and sulfonate group-containing aromatic dicarboxylic acid; more preferably at least one type selected from the group consisting of 5-hydroxyisophthalic acid, 1,3,5-benzene tricarboxylic acid, 5-aminoisophthalic acid, 5-sulfoisophthalic acid, 2-sulfoterephthalic acid, and 4-sulfo-2, 6-naphthalene dicarboxylic acid; further preferably at least one type selected from the group consisting of 5-sulfoisophthalic acid and 2-sulfoterephthalic acid; and further more preferably 5-sulfoisophthalic acid.
<7> The method for manufacturing the soluble material for three-dimensional modeling according to any one of <1> to <6>, wherein the content of the hydrophilic group in the polyester resin is preferably 0.5 mmol/g or more, more preferably 0.6 mmol/g or more, and further preferably 0.7 mmol/g or more, preferably 3.0 mmol/g or less, more preferably 2.0 mmol/g or less, and further preferably 1.5 mmol/g or less, 0.5 mmol/g to 3.0 mmol/g, more preferably 0.6 mmol/g to 2.0 mmol/g, and further preferably 0.7 mmol/g to 1.5 mmol/g.
<8> The method for manufacturing the soluble material for three-dimensional modeling according to any one of <1> to <7>, wherein the ratio of the amount of the hydrophilic monomer unit A₁ to the total amount of monomer units in the polyester resin is 5 mol% or more, preferably 7 mol% or more, more preferably 10 mol% or more, and further preferably 12 mol% or more, 35 mol% or less, preferably 33 mol% or less, more preferably 32 mol% or less, and further preferably 30 mol% or less, preferably 5 mol% to 35 mol%, more preferably 7 mol% to 33 mol%, further preferably 10 mol% to 32 mol%, further more preferably 12 mol% to 30 mol%, and further more preferably 8 mol% to 13 mol%.
<9> The method for manufacturing the soluble material for three-dimensional modeling according to any one of <1> to <8>, wherein a monomer B₁ for deriving the hydrophobic dicarboxylic acid monomer unit B₁ is preferably at least one type selected from the group consisting of aromatic dicarboxylic acid, aliphatic dicarboxylic acid, and alicyclic dicarboxylic acid, more preferably at least one type selected from the group consisting of terephthalic acid, isophthalic acid, 2,5-furan dicarboxylic acid, 2,6-naphthalene dicarboxylic acid, 1,4-cyclohexane dicarboxylic acid, and 1,3-adamantane dicarboxylic acid, further preferably at least one type selected from the group consisting of terephthalic acid, 2,5-furan dicarboxylic acid, and 2,6-naphthalene dicarboxylic acid.
<10> The method for manufacturing the soluble material for three-dimensional modeling according to any one of <1> to <9>, wherein the ratio of the amount of the hydrophobic dicarboxylic acid monomer unit B₁ in the polyester resin to the total amount of monomer units in the polyester resin is preferably 15 mol% or more, more preferably 18 mol% or more, and further preferably 20 mol% or more; preferably 45 mol% or less, more preferably 42 mol% or less, and further preferably 40 mol% or less; preferably 15 mol% to 45 mol%, more preferably 20 mol% to 42 mol%, and further preferably 30 mol% to 40 mol%.
<11> The method for manufacturing the soluble material for three-dimensional modeling according to any one of <1> to <10>, wherein the mole ratio of the hydrophilic monomer unit A₁ to the hydrophobic dicarboxylic acid monomer unit B₁ (hydrophilic monomer unit A₁ / hydrophobic dicarboxylic acid monomer unit B₁) is preferably 10/90 or more, more preferably 15/85 or more, further preferably 18/82 or more, and further more preferably 20/80 or more; preferably 70/30 or less, more preferably 65/35 or less, further preferably 60/40 or less, further more preferably 40/60 or less, and further more preferably 26/74 or less.
<12> The method for manufacturing the soluble material for three-dimensional modeling according to any one of <1> to <11>, wherein the ratio of diethylene glycol to the total amount of all diol monomer units in the polyester resin is preferably 5 mol% or more, more preferably 10 mol% or more, further preferably 15 mol% or more, further more preferably 20 mol% or more, especially preferably 25 mol% or more, more especially preferably 30 mol% or more; and preferably 60 mol% or less, more preferably 55 mol% or less, further preferably 50 mol% or less, and further preferably 45 mol% or less.
<13> The method for manufacturing the soluble material for three-dimensional modeling according to any one of <1> to <12>, wherein the ratio of the total amount of ethylene glycol, 1,2-propanediol, 1,3-propanediol, diethylene glycol, dipropylene glycol, 1,4-cyclohexane dimethanol, hydrogenated bisphenol A, isosorbide, bisphenoxyethanolfluorene, bisphenolfluorene, biscresoxyethanolfluorene and biscresolfluorene to the total amount of all diol monomer units in the polyester resin is preferably 80 mol% or more, more preferably 90 mol% or more, further preferably 95 mol% or more, further more preferably 98 mol% or more, especially preferably substantially 100 mol%, and more especially preferably 100 mol%.
<14> The method for manufacturing the soluble material for three-dimensional modeling according to any one of <1> to <13>, wherein the polyester resin is preferably a polyester resin α in which the ratio of the hydrophilic monomer unit A₁ in the total of all dicarboxylic acid monomer units, which include the hydrophilic monomer unit A₁, is 10 mol% to 70 mol%; the ratio of the dicarboxylic acid monomer units B₁ in the same total is 30 mol% to 90 mol%; and the dicarboxylic acid B₁ for obtaining the dicarboxylic acid monomer units B₁ is 2,6-naphthalene dicarboxylic acid.
<15> The method for manufacturing the soluble material for three-dimensional modeling according to any one of <1> to <14>, wherein the polyamide resin is a polyamide resin having a hydrophilic monomer unit A₂ having a hydrophilic group, a hydrophobic dicarboxylic acid monomer unit B₂, and a hydrophobic diamine monomer unit, in which the ratio of the hydrophilic monomer unit A₂ to the total amount of all monomer units in the polyamide resin is 2.5 mol% to 40 mol%.
<16> The method for manufacturing the soluble material for three-dimensional modeling according to any one of <1> to <15>, wherein the monomer A₂ is preferably at least one type selected from the group consisting of hydroxy group-containing aromatic dicarboxylic acid, primary amino group-containing aromatic dicarboxylic acid, sulfonic acid group-containing aromatic dicarboxylic acid, and sulfonate group-containing aromatic dicarboxylic acid, more preferably at least one type selected from the group consisting of 5-hydroxyisophthalic acid, 1,3,5-benzene tricarboxylic acid, 5-aminoisophthalic acid, 5-sulfoisophthalic acid, 2-sulfoterephthalic acid, and 4-sulfo-2, 6-naphthalene dicarboxylic acid, further preferably at least one type selected from the group consisting of 5-sulfoisophthalic acid and 2-sulfoterephthalic acid, further more preferably 5-sulfoisophthalic acid.
<17> The method for manufacturing the soluble material for three-dimensional modeling according to any one of <1> to <16>, wherein the content of the hydrophilic group in the polyamide resin is preferably 0.5 mmol/g or more, more preferably 0.6 mmol/g or more, and further preferably 0.7 mmol/g or more, preferably 3.0 mmol/g or less, more preferably 2.0 mmol/g or less, and further preferably 1.5 mmol/g or less, preferably 0.5 mmol/g to 3.0 mmol/g, more preferably 0.6 mmol/g to 2.0 mmol/g, and further preferably 0.7 mmol/g to 1.5 mmol/g.
<18> The method for manufacturing the soluble material for three-dimensional modeling according to any one of <1> to <17>, wherein the ratio of the amount of the hydrophilic monomer unit A₂ to the total amount of monomer units in the polyamide resin is 2.5 mol% or more, preferably 4 mol% or more, more preferably 6 mol% or more, further preferably 8 mol% or more, and further more preferably 10 mol% or more, 40 mol% or less, preferably 35 mol% or less, more preferably 31 mol% or less, further preferably 25 mol% or less, further more preferably 20 mol% or less, especially preferably 15 mol% or less, more especially preferably 10 mol% or less, and more especially preferably 8 mol% or less, preferably 2.5 mol% to 40 mol%, more preferably 4 mol% to 35 mol%, further preferably 6 mol% to 31 mol%, further more preferably 8 mol% to 20 mol%, especially preferably 8 mol% to 15 mol%, and more especially preferably 8 mol% to 12 mol%.
<19> The method for manufacturing the soluble material for three-dimensional modeling according to any one of <1> to <18>, wherein a dicarboxylic acid B₂ for deriving the hydrophobic dicarboxylic acid monomer unit B₂ is preferably at least one type selected from the group consisting of aromatic dicarboxylic acid, aliphatic dicarboxylic acid, and alicyclic dicarboxylic acid, more preferably at least one type selected from the group consisting of terephthalic acid, isophthalic acid, 2,5-furan dicarboxylic acid, 2,6-naphthalene dicarboxylic acid, 1,4-cyclohexane dicarboxylic acid, and 1,3-adamantane dicarboxylic acid, further preferably at least one type selected from the group consisting of terephthalic acid, 2,5-furan dicarboxylic acid, and 2,6-naphthalene dicarboxylic acid, further more preferably terephthalic acid.
<20> The method for manufacturing the soluble material for three-dimensional modeling according to any one of <1> to <19>, wherein the ratio of the amount of the hydrophobic dicarboxylic acid monomer unit B₂ in the polyamide resin to the total amount of monomer units in the polyamide resin is preferably 10 mol% or more, more preferably 20 mol% or more, further preferably 30 mol% or more, further more preferably 35 mol% or more, especially preferably 40 mol% or more, and more especially preferably 42 mol% or more, preferably 47.5 mol% or less, more preferably 45 mol% or less, further preferably 42 mol% or less, and further more preferably 40 mol% or less, preferably 10 mol% to 47.5 mol%, more preferably 20 mol% to 45 mol%, and further preferably 30 mol% to 42 mol%.
<21> The method for manufacturing the soluble material for three-dimensional modeling according to any one of <1> to <20>, wherein the mole ratio of the hydrophilic monomer unit A₂ to the hydrophobic dicarboxylic acid monomer unit B₂ (hydrophilic monomer unit A₂ / hydrophobic dicarboxylic acid monomer unit B₂) is preferably 10/90 or more, more preferably 15/85 or more, further preferably 18/82 or more, and further more preferably 20/80 or more, preferably 50/50 or less, more preferably 40/60 or less, further preferably 30/70 or less, and further more preferably 25/75 or less.
<22> The method for manufacturing the soluble material for three-dimensional modeling according to any one of <1> to <21>, wherein the weight average molecular weight of the base polymer is preferably 3,000 or more, more preferably 3,500 or more, further preferably 4,000 or more, preferably 70,000 or less, more preferably 50,000 or less, further preferably 30,000 or less, and further more preferably 20,000 or less.
<23> The method for manufacturing the soluble material for three-dimensional modeling according to any one of <1> to <22>, wherein the glass transition temperature of the base polymer is 50°C or higher, preferably 60°C or higher, more preferably 70°C or higher, and further preferably 80°C or higher, 250°C or lower, preferably 220°C or lower, more preferably 180°C or lower, further preferably 160°C or lower, further more preferably 140°C or lower, and further more preferably 120°C or lower.
<24> The method for manufacturing the soluble material for three-dimensional modeling according to any one of <1> to <23>, wherein a melt flow rate of the base polymer is preferably 1.0 g/10 min or more, more preferably 1.5 g/10 min or more, further preferably 2.0 g/10 min or more, and further more preferably 2.5 g/10 min or more, preferably 10 g/10 min or less, more preferably 7 g /10 min or less, further preferably 6 g /10 min or less, and further more preferably 5 g/10 min or less.
<25> The method for manufacturing the soluble material for three-dimensional modeling according to any one of <1> to <24>, wherein a mixing ratio of the base polymer to the soluble material for three-dimensional modeling is preferably 70% by mass or more and more preferably 80% by mass or more, preferably 95% by mass or less and more preferably 90% by mass or less.
<26> The method for manufacturing the soluble material for three-dimensional modeling according to any one of <1> to <25>, wherein a mixing ratio of the compatibilizer to 100 parts by mass of the base polymer is preferably 2 parts by mass or more and more preferably 3 parts by mass or more, preferably 20 parts by mass or less and more preferably 10 parts by mass or less.
<27> The method for manufacturing the soluble material for three-dimensional modeling according to any one of <1> to <25>, wherein the compatibilizer is preferably a compatibilizer containing at least one type or more of the reactive groups selected from the group consisting of an epoxy group, an acid anhydride group, an isocyanate group, an amino group, a carboxyl group, and an oxazoline group; and more preferably a reactive compatibilizer having an epoxy group.
<28> The method for manufacturing the soluble material for three-dimensional modeling according to any one of <1> to <27>, wherein the elastomer is preferably an elastomer containing at least one type or more selected from the group consisting of an acrylic elastomer, an olefin elastomer, a styrene elastomer, a polyester elastomer, a urethane elastomer, a polyamide elastomer, and a silicone elastomer; and more preferably an acrylic elastomer.
<29> The method for manufacturing the soluble material for three-dimensional modeling according to any one of <1> to <28>, wherein a mixing ratio of the elastomer to 100 parts by mass of the base polymer is preferably 5 parts by mass or more and more preferably 10 parts by mass or more, preferably 40 parts by mass or less and more preferably 30 parts by mass or less.
<30> The method for manufacturing the soluble material for three-dimensional modeling according to any one of <1> to <29>, wherein a ratio of the total length K of the kneading discs to the total length L of the effective screw of the twin screw extruder that kneads the raw material of the soluble material for three-dimensional modeling (K/L) is larger than 0.20, preferably larger than 0.25, and more preferably larger than 0.30, smaller than 0.70, preferably smaller than 0.60, more preferably smaller than 0.50, and further preferably smaller than 0.40, 0.20 < (K/L) < 0.70, preferably 0.25 < (K/L) < 0.60, more preferably 0.30 < (K/L) < 0.5, and further preferably 0.30 < (K/L) < 0.4.
<31> The method for manufacturing the soluble material for three-dimensional modeling according to any one of <1> to <30>, wherein a ratio of the total length L of the effective screw to the diameter D of the screw of the twin screw extruder that kneads the raw materials of the soluble material for three-dimensional modeling (L/D) is larger than 25, preferably larger than 27, and more preferably larger than 30, preferably smaller than 120, more preferably smaller than 100, and further preferably smaller than 80, 25 < (L/D), preferably 25 < (L/D) < 120, more preferably 27 < (L/D) < 100, and further preferably 30 < (L/D) < 80.
<32> The method for manufacturing the soluble material for three-dimensional modeling according to any one of <1> to <31>, wherein a temperature Tₘᵢₓ of the raw material of the soluble material for three-dimensional modeling in the kneading step with respect to the glass transition temperature T_{g} of the base polymer contained in the raw materials of the soluble material for three-dimensional modeling is higher than T_{g} + 80 (°C), preferably higher than T_{g} + 90 (°C), more preferably higher than T_{g} + 100 (°C), further preferably higher than T_{g} + 110 (°C), further more preferably higher than T_{g} + 120 (°C), and particularly preferably higher than T_{g} + 130 (°C), lower than T_{g} + 200 (°C), preferably lower than T_{g} + 190 (°C), more preferably lower than T_{g} + 180 (°C), and further preferably lower than T_{g} + 170 (°C), T_{g} + 80 (°C) < Tₘᵢₓ < 200 (°C), preferably T_{g} + 90 (°C) < Tₘᵢₓ < T_{g} + 190 (°C), more preferably T_{g} + 100 (°C) < Tₘᵢₓ < T_{g} + 180 (°C), further preferably T_{g} + 110 (°C) < Tₘᵢₓ < T_{g} + 170 (°C), further more preferably T_{g} + 120 (°C) < Tₘᵢₓ < T_{g} + 170 (°C), and particularly preferably T_{g} + 130 (°C) < Tₘᵢₓ < T_{g} + 170 (°C) .
<33> A soluble material for three-dimensional modeling manufactured by the method for manufacturing the soluble material for three-dimensional modeling according to any one of <1> to <32>.
<34> The soluble material for three-dimensional modeling according to <33>, wherein the glass transition temperature (Tg) of the soluble material for three-dimensional modeling is preferably 50°C or higher, more preferably 60°C or higher, further preferably 70°C or higher, and further more preferably 80°C or higher, preferably 250°C or lower, more preferably 220°C or lower, further preferably 180°C or lower, further more preferably 160°C or lower, further more preferably 140°C or lower, and further more preferably 120°C or lower.
<35> The soluble material for three-dimensional modeling according to <33> or <34>, wherein a melt flow rate of the soluble material for three-dimensional modeling is preferably 1.0 g/10 min or more, more preferably 1.5 g/10 min or more, further preferably 2.0 g/10 min or more, and further more preferably 2.5 g/10 min or more, preferably 10 g/10 min or less, more preferably 7 g /10 min or less, further preferably 6 g /10 min or less, and further more preferably 5 g/10 min or less.
<36> The soluble material for three-dimensional modeling according to any one of <33> to <35>, wherein a average particle size of the elastomer in the soluble material for three-dimensional modeling is preferably 2.5 µm or less, more preferably 2.0 µm or less, further preferably 1.7 µm or less, and further more preferably 1.4 µm or less.
<37> The soluble material for three-dimensional modeling according to any one of <33> to <36>, wherein the soluble material for three-dimensional modeling is a filament.
<38> The soluble material for three-dimensional modeling according to any one of <33> to <37>, wherein the diameter of the filament is preferably 0.5 mm or more, and more preferably 1.0 mm or more, preferably 3.0 mm or less, more preferably 2.0 mm or less, and further preferably 1.8 mm or less.
<39> The soluble material for three-dimensional modeling according to any one of <33> to <38>, wherein the filament is drawn.
<40> The soluble material for three-dimensional modeling according to any one of <33> to <39>, wherein the draw ratio in the drawing is preferably 1.5 or more, more preferably 2 or more, even more preferably 3 or more, even more preferably 5 or more, preferably 200 or less, more preferably 150 or less, even more preferably 100 or less, even more preferably 50 or less.
<41> The soluble material for three-dimensional modeling according to any one of <33> to <40>, wherein the drawing temperature is preferably in a range of a temperature from 20°C lower than the glass transition temperature of the soluble material for three-dimensional modeling to 110°C higher than the glass transition temperature, the lower limit of the drawing temperature is more preferably 10°C lower than the glass transition temperature, and further preferably same as the glass transition temperature, the upper limit of the drawing temperature is more preferably 110°C higher than the glass transition temperature, further preferably 100°C higher than the glass transition temperature, and further more preferably 90°C higher than the glass transition temperature.
<42> A method for manufacturing a three-dimensional object by fused deposition modeling, including a step of obtaining a precursor of a three-dimensional object containing the three-dimensional object and a support material, and a support material removing step of making the precursor of the three-dimensional object contact a neutral water to remove the support material, wherein the material of the support material is the soluble material for three-dimensional modeling manufactured by the method for manufacturing a three-dimensional object according to any one of <1> to <32>.
<43> The method for manufacturing a three-dimensional object according to <42>, wherein a modeling material as a material for the three-dimensional object is preferably at least one member selected from the group consisting of an ABS resin, a polylactate resin, a polycarbonate resin, 12-nylon, 6,6-nylon, 6-nylon, a polyphenylsulfone resin, polyetheretherketone, and polyetherimide; more preferably an ABS resin and/or a polylactic resin; and further preferably an ABS resin.
<44> The method for manufacturing a three-dimensional object according to <42> or <43>, wherein the neutral water contains a water-soluble organic solvent.
<45> The method for manufacturing a three-dimensional object according to any one of <42> to <44>, wherein the water-soluble organic solvent is preferably alcohols such as methanol, ethanol, and 2-propanol; glycol ethers such as propylene glycol monomethyl ether, ethylene glycol monoethyl ether, ethylene glycol mono-t-butyl ether, and diethylene glycol monobutyl ether; and ketones such as acetone, and methyl ethyl ketone.
<46> The method for manufacturing a three-dimensional object according to any one of <42> to <45>, wherein the content of the water-soluble organic solvent in the neutral water is preferably 0.1% or more by mass, more preferably 0.5% or more by mass, even more preferably 1% or more by mass, even more preferably 3% or more by mass; and is preferably 50% or less by mass, preferably 40% or less by mass, preferably 30% or less by mass, preferably 20% or less by mass.
<47> The method for manufacturing a three-dimensional object according to any one of <42> to <46>, wherein the amount of the neutral water used is preferably 10 mass times or more, and more preferably 20 mass times or more, preferably 10,000 mass times or less, more preferably 5,000 mass times or less, further preferably 1,000 mass times or less, and further preferably 100 mass times or less to the support material.
<48> The method for manufacturing a three-dimensional object according to any one of <42> to <47>, wherein the period over which the soluble material for three-dimensional modeling is caused to contact the neutral water is preferably 5 minutes or longer, preferably 180 minutes or shorter, more preferably 120 minutes or shorter, even more preferably 90 minutes or shorter.
<49> The method for manufacturing a three-dimensional object according to any one of <42> to <48>, wherein the washing temperature is preferably 15°C or higher, more preferably 25°C or higher, even more preferably 30°C or higher, even more preferably 40°C or higher, preferably 85°C or lower, more preferably 70°C or lower, and even more preferably 60°C or lower.
<50> A support material that supports a three-dimensional object when manufacturing the three-dimensional object by a fused deposition modeling type 3D printer, wherein the material of the support material is the soluble material for three-dimensional modeling manufactured by the method for manufacturing a three-dimensional object according to any one of <1> to <32>.

### <Synthesis of Base Polymer>

### [Synthesis Example 1]

4.09 kg of 2,6-naphthalene dimethylcarbonate (manufactured by BP p.l.c.), 3.06 kg of ethylene glycol (special grade, manufactured by Wako Pure Chemical Corporation), 1.69 kg of sodium dimethyl 5-sulfoisophthalate (manufactured by Takemoto Oil & Fat Co., Ltd.), 1.71 kg of titanium tetrabutoxide (first grade, manufactured by Tokyo Chemcial Industry Co., Ltd.), and 42.0 g of sodium acetate trihydrate (special grade, manufactured by Wako Pure Chemical Corporation) were prepared in a 100-liter stainless steel reactor (equipped with a stirrer and a nitrogen introducing tube). The temperature was increased from a room temperature up to 230°C by taking 1.5 hours at a normal pressure under a nitrogen atmosphere. The mixture was heated at 230°C for 360 minutes to perform a transesterification. 637 mg of 85% phosphoric acid (special grade, manufactured by Sigma-Aldrich Japan) was added to the mixture and the mixture was stirred for 10 minutes. While stirring, the temperature was increased from 230°C up to 260°C by taking 90 minutes; and at the same time, the pressure was decreased to 30 mmHg to perform a polycondensation. A polyester compound 1 (a light brown solid at room temperature) was obtained.

### [Synthesis Example 2]

The synthesis example 2 was performed in the same way as the synthesis example 1 except that the amount of ethylene glycol was changed to 3.20 kg, the time for increasing the temperature up to 260°C was changed from 90 minutes to 130 minutes to obtain a polyester resin 2.

### [Synthesis Example 3]

The synthesis example 3 was performed in the same way as the synthesis example 1 except that the amount of ethylene glycol was changed to 3.20 kg, the time for increasing the temperature up to 260°C was changed from 90 minutes to 150 minutes to obtain a polyester resin 3.

### [Analysis of Base Polymer]

### [Composition of Polyester Resin]

A proton NMR measurement was performed using MR400 (NMR manufactured by Agilent Technologies, Inc.) to obtain the compositions of the polyester resins 1 to 3.

### [Amount of Hydrophilic Group in Polyester Resin]

The amount (unit: mmol/g) of the hydrophilic group (SO₃) in the polyester resin was obtained from the composition of each of the polyester resins 1 to 3 measured with the above-described method.

### [Melt Flow Rate]

A melt flow rate tester "No.120-SAS-2000 Melt Flow Index Tester (semi-automatic)" manufactured by Yasuda Seiki Seisakusho, Ltd. was used to measure the mass of each of the polyester resins 1 to 3 resin (240°C / 5.0 kg) that flowed per 10 minutes.

### [Weight Average Molecular Weight]

10 mg of each of the polyester resins 1 to 3 was dissolved into 3 g of HFIP (1,1,1,3,3,3-hexafluoro-2-propanol, manufactured by Wako Pure Chemical Corporation) for 8 hours and the weight average molecular weight was measured by a gel permeation chromatography (GPC).
Tester: HLC-8320GPC (manufactured by TOSOH Corporation)
Eluent: HFIP / 0.5 mM sodium trifluoroacetate
Flow rate: 0.2 mL/min
Test temperature: 40°C
Column for analysis: TSK-Gel Super AWM-H (manufactured by TOSOH Corporation)
Calibration curve: Shodex STANDARD M-75
Standard: Polymethylmethacrylate (PMMA)

### [Glass Transition Temperature]

A press machine ("LABO PRESS P2-30T" manufactured by Toyo Seiki Seisaku-sho, Ltd.) was used to press each of the polyester resins 1 to 3 with a pressure of 0.5 MPa at 230°C for 2 minutes and then 20 MPa at 230°C for 2 minutes. Each of the pressed polyester resins was rapidly cooled to produce a sheet of 0.4 mm thick. 5 mg to 10 mg of a sample was cut out from the sheet with a pair of scissors. The sample was precisely weighed and sealed in an aluminum pan. By using a DSC ("DSC7020" manufactured by Seiko Instruments Inc.), the temperature of the aluminum pan with the sample was increased from 30°C to 250°C at 10°C/min and the heated aluminum pan with the sample was rapidly cooled to 30°C. Then, the temperature of the aluminum pan with the sample was increased again to 250°C at 10°C/min to obtain a DSC curve. The glass transition temperature (°C) was obtained from the DSC curve.

The measurement results are shown in Table 1. In Table 1, SIP (mol%) is the ratio of the amount of the 5-sulfoisophthalate monomer unit in the total amount of the dicarboxylic acid monomer unit, NPDCA (mol%) is the ratio of the amount of the 2,6-naphthalene dicarboxylic acid monomer unit in the total amount of the dicarboxylic acid monomer unit, EG (mol%) is the ratio of the amount of the ethylene glycol monomer unit in the total amount of the diol monomer unit, and DEG (mol%) is the ratio of the amount of the diethylene glycol monomer unit in the total amount of the diol monomer unit.

**[Table 1]**

| | | | Polyester Resin 1 | Polyester Resin 2 | Polyester Resin 3 |
|---|---|---|---|---|---|
| Preparation | Dicarboxylic Acid | SIP (mol%) | 25.4 | 25.4 | 25.4 |
| | | NPDCA (mol%) | 74.6 | 74.6 | 74.6 |
| | Diol | EG (mol%) | 220 | 230 | 230 |
| | Time (min) for Rising Temperature to 260°C | | 90 | 130 | 150 |
| Composition | Dicarboxylic Acid | SIP (mol%) | 25.4 | 25.2 | 25.1 |
| | | NPDCA (mol%) | 74.6 | 74.8 | 74.9 |
| | Diol | EG (mol%) | 73 | 73.5 | 73.9 |
| | | DEG (mol%) | 27 | 26.5 | 26.1 |
| Physical Properties | Melt Flow Rate (M) (g/10min) | | 7.5 | 6.2 | 5.3 |
| | SO₃ (mmol/g) | | 0.99 | 0.99 | 0.98 |
| | Weight Average Molecular Weight (Mw) | | 12000 | 13800 | 14000 |
| | Glass Transition Temperature (°C) | | 104 | 102 | 107 |

### <Examples>

### [Example 1]

80.0 kg of the polyester compound 3, 10.0 kg of KURARITY™ LA2250 (manufactured by Kuraray Co., Ltd.: thermoplastic elastomer: polymethylmethacrylate-polybutylacrylate-polymethylmethacry late tri-block copolymer), and 4.0 kg of Bondfast™ 7B (manufactured by Sumitomo Chemical Co., Ltd.: ethylene-vinylacetate-glycidylmethacrylate copolymer) as a compatibilizer were dried at 60°C under a reduced pressure. Then, a weight feeder was used to feed the dried mixture. By using a twin screw extruder ("TEM-41SS" manufactured by Toshiba Machine Co., Ltd.: screw diameter 41 mm, double type), the dried mixture was heat-melted and extruded with a cylinder temperature of 220°C, a screw rotation of 250 rpm, and a discharging speed of 70 kg/h to obtain a composition of a white mixture. The configuration of the screws of the twin screw extruder in Example 1 was as follows.
7 kneading discs (forward twist) at 776 mm to 1,050 mm from the starting point
2 kneading discs (forward twist) at 1,302 mm to 1,650 mm from the starting point
2 kneading discs (orthogonal), 1 kneading disc (forward twist), 2 kneading discs (orthogonal), and 2 kneading discs (reverse twist)
1 kneading disc (forward twist), 1 kneading disc (orthogonal), 1 kneading disc (forward twist), 1 kneading disc (orthogonal), 1 kneading disc (forward twist), and 1 kneading disc (orthogonal) at 1,934 mm to 2,176 mm from the starting point

The total length of the screw was 2,551 mm and the total length of the kneading discs was 864 mm.

### [Example 2]

8.0 kg of the polyester compound 2, 1.0 kg of KURARITY™ LA2250, and 0.4 kg of Bondfast™ 7B as a compatibilizer were dried at 60°C under a reduced pressure. Then, the dried mixture was premixed by a Hanschel mixer. By using a twin screw extruder ("PCM30" manufactured by Ikegai Corporation, screw diameter 29 mm, triple type), the dried mixture was heat-melted and extruded with a cylinder temperature of 210°C, a screw rotation of 200 rpm, and a discharging speed of 3 kg/h to obtain a composition of a white mixture. The configuration of the screws of the twin screw extruder in the example 2 was as follows.
4 kneading discs (neutral), 2 kneading discs (forward twist), and 1 kneading disc (reverse twist) at 250 mm to 365.5 mm from the starting point
1 kneading disc (forward twist) and 1 kneading disc (reverse twist) at 410.5 mm to 443.5 mm from the starting point
1 kneading disc (forward twist) and 1 kneading disc (reverse twist) at 488.5 mm to 521.5 mm from the starting point
1 kneading disc (forward twist) and 1 kneading disc (reverse twist) at 566.5 mm to 599.5 mm from the starting point
A seal ring at 614.5 mm to 649.5 mm from the starting point
A pineapple screw at 749.5 mm to 799.5 mm from the starting point

The total length of the screw was 799.5 mm and the total length of the kneading discs was 214.5 mm.

### [Example 3]

A composition of a white mixture was obtained by performing the same operation as Example 2 except the cylinder temperature was changed to 230°C.

### [Example 4]

A composition of a white mixture was obtained by performing the same operation as Example 2 except the cylinder temperature was changed to 190°C.

### [Example 5]

40.0 kg of the polyester compound 3 and 5.0 kg of Tuftec™ M1913 (manufactured by Asahi Kasei Corporation: thermoplastic elastomer having an acid anhydride group: maleic anhydride-modified SEBS) were dried at 60°C under a reduced pressure. Then, a weight feeder was used to feed the dried mixture. By using a twin screw extruder ("TEM-41SS" manufactured by Toshiba Machine Co., Ltd.: screw diameter 41 mm, double type), the dried mixture was heat-melted and extruded with a cylinder temperature of 230°C, a screw rotation of 250 rpm, and a discharging speed of 70 kg/h to obtain a composition of a white mixture. The configuration of the screws of the twin screw extruder, the total length of the screw, and the total length of the kneading disc in Example 5 were same as those in Example 1.

### [Example 6]

40.0 kg of the polyester compound 3 and 7.0 kg of Tuftec™ M1913 (manufactured by Asahi Kasei Corporation: thermoplastic elastomer having an acid anhydride group: maleic anhydride-modified SEBS) were dried at 60°C under a reduced pressure. Then, a weight feeder was used to feed the dried mixture. By using a twin screw extruder ("TEM-41SS" manufactured by Toshiba Machine Co., Ltd.: screw diameter 41 mm, double type), the dried mixture was heat-melted and extruded with a cylinder temperature of 230°C, a screw rotation of 250 rpm, and a discharging speed of 70 kg/h to obtain a composition of a white mixture. The configuration of the screws of the twin screw extruder, the total length of the screw, and the total length of the kneading disc in Example 6 were same as those in Example 1.

### [Comparative Example 1]

A composition of a white mixture was obtained by performing the same operation as Example 2 except the configuration of the screws was changed to as follows.
4 kneading discs (neutral) at 330 mm to 396 mm from the starting point
4 kneading discs (forward twist) at 496 mm to 562 mm from the starting point
A seal ring at 562 mm to 597 mm from the starting point
A pineapple screw at 747 mm to 797 mm from the starting point

The total length of the screws was 797 mm and the total length of the kneading discs was 132 mm.

### [Reference Example 1]

### (Preparation of Drawn Filament (Monofilament Manufacturing Apparatus) 1)

A monofilament manufacturing apparatus equipped with an extruder, a winding device, and a hot air bath (monofilament manufacturing apparatus manufactured by Chubu Machine Co., Ltd.) was used to produce a drawn filament of the composition obtained in Example 1. The composition obtained in Example 1 was put in the hopper of an extruder having a nozzle diameter of 5 mm (gear pump = 2.4 cc/rotation, gear pump rotation 29.4 rpm, screw diameter 35 mm, L/D = 28) and the composition was extruded with a cylinder temperature of 230°C and a rotation of 23 rpm (the temperature of the resin at discharge was 210°C) . The extruded composition was wound by a first roll at a speed of 12.0 m/min while being air-cooled and drawn (the temperature of the resin in the rear side of the first roll was 80°C) . Then, the composition was heated by a hot air of 90°C, wound by a second roll at a speed of 37.0 m/min, and drawn to obtain a filament having a diameter of about 1.4 mm to 1.6 mm (the total draw ratio was 10 times to 13 times) . The break elongation of this drawn filament was 12%, and the toughness was higher than that of the filament of the same composition having the draw ratio of 1.8 times produced by a capillograph. As the draw ratio becomes larger, the orientation of the polyester molecule advances more, the elastomer is drawn more, and as a result, the particle size becomes smaller. This is considered to be a reason why the toughness increased. The obtained filament was fed to a 3D printer "Replicator 2X" manufactured by MakerBot Industries, LLC and extruded from the heat nozzle having a temperature of 230°C. It was confirmed that the composition was discharged without clogging the nozzle and the melt composition solidified right away.

### [Reference Example 2]

### (Preparation of Drawn Filament (Monofilament Manufacturing Apparatus) 2)

The filament was manufactured in the same way as the Reference Example 1 except the winding speed of the first roll was changed to 18.2 m/min. A filament having a diameter of about 1.4 mm to 1.6 mm was obtained (the total draw ratio magnification was 10 times to 13 times) . The break elongation of this drawn filament was 17%.

### [Reference Example 3]

### (Preparation of Drawn Filament (Monofilament Manufacturing Apparatus) 3)

The filament was manufactured in the same way as the Reference Example 1 except the winding speed of the first roll was changed to 21.5 m/min. A filament having a diameter of about 1.4 mm to 1.6 mm was obtained (the total draw ratio was 10 times to 13 times) . The break elongation of this drawn filament was 19%.

As the winding speed of the first roll becomes faster, the polyester molecules get drawn between the nozzle of the extruder and the first roll, the orientation of the polyester molecule advances more, the elastomer is drawn more, and as a result, the particle size becomes smaller. This is considered to be a reason why the toughness increases.

### [Evaluation Method]

### [Temperature of Soluble Material for Three-Dimensional Modeling]

A thermocouple was used to measure the temperature of the soluble material for three-dimensional modeling discharged near the die of the twin screw extruder.

### [Glass Transition Temperature of Soluble Material for Three-Dimensional Modeling]

The glass transition temperature of the soluble material for three-dimensional modeling was measured in the same analysis method as the glass transition temperature of the base polymer.

### [Break Elongation of Filament]

A tensile compression tester (trade name "Autograph AGS-X" manufactured by Shimadzu Corporation) was used to measure the break elongation of the filament with the break elongation tensile test of a molded body. 90 mm of the filament was set at a span of 50 mm and the measurement was performed at a cross head speed of 1 mm/min to examine the break elongation (%) . A large value of the break elongation shows high toughness. A 10-point test was performed per sample and the average of the 10 values was made to be a measured value.

### [Preparation of Drawn Filament]

A capillograph ("Capilograph 1D" manufactured by Toyo Seiki Seisaku-sho, Ltd.) was used to extrude finely crashed sample pieces from a capillary having a diameter of 2.0 mm and a length of 10 mm at a melt temperature of 210°C and an extrusion speed of 10 mm/min. The tip of the extruded sample was pinched with tweezers and lightly pulled to produce a filament having a diameter of 1.5 mm (draw ratio 1.8 times).

### [Toughness]

The toughness of the drawn filament obtained with the above-described method was evaluated. As a simple evaluation of the toughness, the produced filament was bent by hand. The elevation criteria were as follows.
A: 180° bendable
B: 90° bendable
C: 90° unbendable

### [Average Particle Size of Elastomer]

### [Average Particle Sizes of Elastomers used in Examples 1 to 4 and Comparative Example 1]

A press machine ("LABO PRESS P2-30T" manufactured by Toyo Seiki Seisaku-sho, Ltd.) was used to press the sample by applying a pressure of 0.5 MPa at 230°C for 2 minutes and then 20 MPa at 230°C for 2 minutes. Then, the pressed sample was rapidly cooled to produce a sheet having a thickness of 0.4 mm. The sheet was broken by bending in liquid nitrogen. The sheet was soaked in ethylacetate for 1 hour so that KURARITY™ LA2250 that is an elastomer was eluted into ethylacetate. Then, the sample was taken from ethylacetate and vacuum-dried at 60°C for 1 hour. After vacuum-drying, the broken surface of the sample was observed by SEM ("VE-8800" manufactured by Keyence Corporation) and an image analysis software "WINROOF" was used to obtain an equivalent circle diameter of voids observed on the broken surface of the sample. The voids were counted in an image of 61 µm x 46 µm and the average of the equivalent circle diameter of the voids was calculated to obtain the average particle size.

### [Average Particle Sizes of Elastomers used in Examples 5 and 6]

A press machine ("LABO PRESS P2-30T" manufactured by Toyo Seiki Seisaku-sho, Ltd.) was used to press the sample by applying a pressure of 0.5 MPa at 230°C for 2 minutes and then 20 MPa at 230°C for 2 minutes. Then, the pressed sample was rapidly cooled to produce a sheet having a thickness of 0.4 mm. The sheet was broken by bending in liquid nitrogen. The sheet was soaked in cyclohexane for 1 hour so that Tuftec™ M1913 that is an elastomer was eluted into cyclohexane. Then, the sample was taken from cyclohexane and vacuum-dried at 60°C for 1 hour. After vacuum-drying, the broken surface of the sample was observed by SEM ("VE-8800" manufactured by Keyence Corporation) and an image analysis software "WINROOF" was used to obtain an equivalent circle diameter of voids observed on the broken surface of the sample. The voids were counted in an image of 61 µm x 46 µm and the average of the equivalent circle diameter of the voids was calculated to obtain the average particle size.

### [Melt Flow Rate of Soluble Material for Three-Dimensional Modeling]

The melt flow rate of the soluble material for three-dimensional modeling was measured in the same analysis method as the melt flow rate of the base polymer.

### [Dissolution Time of Filament]

1 L of water was placed in a 1 L beaker and heated to 70°C by a heater while stirring the water at 300 rpm using a magnetic stirrer. A resin filament modeled by a capillograph (a diameter of about 1.5 mm and a length of 13 cm) was suspended from the top of the beaker and soaked in the water. The time until the filament dissolved and broke was measured using a stopwatch.

The results of the analysis are shown in Table 2. "Ratio of the melt flow rate (N/M)" in Table 2 is a ratio of the melt flow rate of the soluble material for three-dimensional modeling (N) to the melt flow rate of the base polymer (M) and the smaller the ratio is shows that the elastomer is dispersed.

**[Table 2]**

| | | Example | | | | | | Comparative Example |
|---|---|---|---|---|---|---|---|---|
| | | 1 | 2 | 3 | 4 | 5 | 6 | 1 |
| Kneading Conditions | Base Polymer | Polyester Resin 3 | Polyester Resin 2 | Polyester Resin 2 | Polyester Resin 2 | Polyester Resin 3 | Polyester Resin 3 | Polyester Resin 1 |
| | Elastomer | LA2250 | LA2250 | LA2250 | LA2250 | M1913 | M1913 | LA2250 |
| | Temperature (°C) of Kneader | 220 | 210 | 230 | 190 | 230 | 230 | 190 |
| | Measured Temperature (°C) of Resin | 250 | 252 | 261 | 224 | 268 | 261 | 220 |
| | Total Length L (mm) of Screw | 2551 | 799.5 | 799.5 | 799.5 | 2551 | 2551 | 797 |
| | Length K (mm) of Kneading Disc | 864 | 214.5 | 214.5 | 214.5 | 864 | 864 | 132 |
| | K/L | 0.34 | 0.27 | 0.27 | 0.27 | 0.34 | 0.34 | 0.17 |
| | Diameter D (mm) of Screw | 41 | 29 | 29 | 29 | 41 | 41 | 29 |
| | L/D | 62.2 | 27.6 | 27.6 | 27.6 | 62.2 | 62.2 | 27.5 |
| Evaluations | Toughness | A | B | B | B | B | B | C |
| | Average Particle Size (µm) of Elastomer | 1.2 | 1.6 | 1.7 | 1.8 | 0.7 | 0.8 | 2.8 |
| | Melt Flow Rate (N) (g/10 min) | 3.5 | 5.3 | 5.3 | 6.2 | 7.9 | 7.7 | 11.1 |
| | Ratio of Melt Flow Rate (N/M) | 0.66 | 0.85 | 0.85 | 1.00 | 1.49 | 1.45 | 1.48 |
| | Dissolution Time (minutes) of Filament | 3.9 | 3.8 | 3.7 | 3.7 | 3.1 | 3.2 | 3.4 |
| | Glass Transition Temperature (°C) | 106 | 101 | 103 | 102 | 104 | 104 | 104 |

## Claims

1. A method for manufacturing a soluble material for three-dimensional modeling that is used as a material of a support material that supports a three-dimensional object when manufacturing the three-dimensional object with a 3D printer of a fused deposition modeling system, comprising a kneading step of kneading raw materials of the soluble material for three-dimensional modeling by a twin screw extruder having a screw configuration in which a ratio of a total length K of kneading discs to a total length L of an effective screw is 0.20 < K/L < 0.70 and in which a temperature Tₘᵢₓ of the raw materials of the soluble material for three-dimensional modeling in the kneading step and a glass transition temperature T_{g} of a base polymer contained in the raw materials of the soluble material for three-dimensional modeling satisfy a formula T_{g} + 80 (°C) < Tₘᵢₓ < T_{g} + 200 (°C) .

2. The method for manufacturing a soluble material for three-dimensional modeling according to claim 1, wherein a ratio of the total length L of the effective screw to a diameter D of a screw of the twin screw extruder (L/D) in the kneading step is L/D > 25.

3. The method for manufacturing a soluble material for three-dimensional modeling according to claim 1 or 2, wherein a glass transition temperature T_{g} of the base polymer is 50°C to 250°C.

4. The method for manufacturing a soluble material for three-dimensional modeling according to any one of claims 1 to 3, wherein the base polymer contains a resin having a hydrophilic group.

5. The method for manufacturing a soluble material for three-dimensional modeling according to any one of claims 1 to 4, wherein the base polymer has a polyester resin having a hydrophilic group and/or a polyamide resin having a hydrophilic group.

6. The method for manufacturing a soluble material for three-dimensional modeling according to claim 5, wherein the polyester resin has a hydrophilic monomer unit A₁ having a hydrophilic group, a hydrophobic dicarboxylic acid monomer unit B₁, and a diol monomer unit; and a ratio of the hydrophilic monomer unit A₁ to a total monomer units in the polyester resin is 10 mol% to 70 mol%.

7. The method for manufacturing a soluble material for three-dimensional modeling according to claim 5 or 6, wherein the polyamide resin has a hydrophilic monomer unit A₂ having a hydrophilic group, a hydrophobic dicarboxylic acid monomer unit B₂, and a hydrophobic diamine monomer unit; and a ratio of the hydrophilic monomer unit A₂ to a total monomer units in the polyamide resin is 2.5 mol% to 40 mol%.

8. The method for manufacturing a soluble material for three-dimensional modeling according to any one of claims 1 to 7, wherein the raw materials of the soluble material for three-dimensional modeling contain a base polymer, an elastomer, and a compatibilizer.

9. The method for manufacturing a soluble material for three-dimensional modeling according to claim 8, wherein the elastomer is an acrylic elastomer resin.

10. The method for manufacturing a soluble material for three-dimensional modeling according to claim 8 or 9, wherein the compatibilizer has a reactive functional group and the reactive functional group is an epoxy group.
